# EUROPEAN PATENT SPECIFICATION

(11) **EP 3 448 922 B1**
(45) Date of publication and mention of the grant of the patent: **20.05.2020**
(21) Application number: 17726995.8
(22) Date of filing: 26.04.2017
(51) Int. Cl.: C08J 3/20, C09D 5/34, C09D 183/06, C09D 183/08, B01J 19/00, B01F 15/02, C08L 83/04

(54) **PRODUCTION OF MOISTURE-SENSITIVE PRODUCTS WITH PRESSURE CHANGES**
HERSTELLUNG VON FEUCHTEEMPFINDLICHEN ERZEUGNISSEN MITTELS DRUCKÄNDERUNGEN
PRODUCTION DES PRODUITS SENSIBLES A L'HUMIDITE PAR DES CHANGEMENTS DE PRESSION

(30) Priority: 28.04.2016 BE 201605294
(43) Date of publication of application: 06.03.2019
(73) Proprietor: Soudal, 2300 Turnhout (BE)
(72) Inventor: GEBOES, Peter, 2630 Aartselaar (BE); LOOS, Luc, 2300 Turnhout (BE); BELIEN, Ulric, 2430 Laakdaal (BE); LAURENT, Bob, 2300 Turnhout (BE); VAN DEN PLAS, Dave, 2920 Kalmthout (BE); DE BACKER, Evelien, 2580 Putte (BE)
(74) Representative: Gevers Patents
(86) International application number: PCT/IB2017/052400
(87) International publication number: WO 2017/187355

(56) References cited:
- EP-A1- 0 802 222
- WO-A1-2013/072410
- WO-A2-01/49774
- WO-A2-2011/051236
- -: "Dosieranlagen", Würschum GmbH , 1 March 2013 (2013-03-01), XP055323412, Retrieved from the Internet: URL:http://www.wuerschum.com/fileadmin/use r_upload/betonindustrie/PDF/Sammel_Dosiera nlagen_dt_03-2013.pdf [retrieved on 2016-11-28]
- S J Slayzak ET AL: "Experimental Evaluation of Commercial Desiccant Dehumidifier Wheels", , 1 May 1996 (1996-05-01), XP055402082, Golden, Colorado (US) Retrieved from the Internet: URL:https://www.nrel.gov/docs/legosti/old/ 21167.pdf [retrieved on 2017-08-29]
- -: "Compressed Air and Food Quality", , 15 November 2011 (2011-11-15), XP055402100, Austin, TX (US) Retrieved from the Internet: URL:https://airtesting.com/in-the-industry /compressed-air-and-food-quality/ [retrieved on 2017-08-29]

## Description

### FIELD OF THE INVENTION

The present invention relates to the production of moisture sensitive products. More particularly, the invention relates to the production of products which are applied locally with some precision, for example, by pressing them out of a cartridge or sausage-like container through a nozzle, and in this way may be used as a sealant, as an adhesive, as a filling material or as an insulating material, with the common characteristic that all these substances after application in one way or another further react with water or moisture, usually from the air or from the immediate vicinity of where the substances were applied, to form their final crosslinked 3-dimensional structure, also referred to as hardening or "curing", in order to obtain the final properties for which they are employed.

### BACKGROUND OF THE INVENTION

An important example of products that ultimately cure by reaction with water or moisture, may be found in the family of caulks, mastics and sealants.

Sealants or mastics - the two terms are used herein as synonyms of each other - are offered having a wide range of properties, ranging from "elastic", over "pseudoplastic", up to "plastic", depending on their response to deformation in their final state, what is also referred to as their "elastic shape recovery" or by the equivalent term "durably permissible deformation", by which is meant the capability of a sealant to return, after stretching, to close to its original shape, or to the deformed shape which afterwards remains in the long term. The capability for "durably permissible deformation", which in practical meaning is the maximal movement a joint may have in practice, ranges thereby typically up to at most 7-8% for plastic products, which often have no shape recovery anymore after repeated deformation, to approximately 10-15% durably permissible reformation for pseudo-plastic or plasto-elastic products, to at least 20% for the truly pure elastic products. With plastic and pseudoplastic sealants, the curing quite often substantially occurs by physical drying, i.e. by the evaporation of some solvent, including water, from the composition.

The family of elastic sealants and mastics on the other hand is primarily populated by products which are cured by chemical reaction with water or moisture. The terms water and moisture are in this document used interchangeably, and as synonyms of each other. The invention indeed relates to the reaction with water (H₂O), and the invention does not make any distinction with regard to the physical state or the purity of the water that would be available for that reaction.

These elastic sealants are usually made based on silicone or based on polyurethanes (PUR), but also hybrid sealants, on the basis of "silane-modified polymers" (SMP) with, for example, a polyurethane or a polyether backbone or main chain, are commonly known. Their capability for "elastic shape recovery" may reach above 70% and often even more than 90%, a feature for which they are highly appreciated, both by professionals and do-it-yourselvers, in the building and construction industry, such as in window mounting, in sanitary applications, for elastic bonding in the glass and metal industry, for sealing in cars, boats, caravans, for the application of connecting joints and expansion joints, and the like.

The silicone sealants thereby represent in the market by far the biggest part of these elastic sealants. The production of elastic silicone sealants is based on a reactive polysiloxane polymer, having on each silicon atom usually each time two organic radicals which extend sideways from the backbone of the silicon oxide polymer, usually a polydimethyl siloxane. The polymer is reactive because there is at both ends of the typically straight [R₂Si-O]ₙ chain a group which is still reactive, typically a hydroxyl function. In the most traditional production of silicone sealants the first chemical step is the reaction of the reactive end groups of the polysiloxane polymer with a particular cross-linking agent or cross-linker to form the so-called "prepolymer", which is then still capable of curing by crosslinking. This reaction step is sometimes also referred to as "end-capping", i.e. the addition of a different end group on the reactive polymer, and the product obtained may thus also be called the "end-capped polymer". Because this step leads to the formation of a "prepolymer", i.e. a compound suitable to polymerise further, this reaction step is often also referred to as "pre-polymerization". This step prepares the reactive polymer for the subsequent polymerization reaction without itself being a polymerization. The term pre-polymerization is thus not incorrect, but it should be interpreted and read with that meaning.

Most conventionally an alkyl triacetoxy silane is used as the cross-linking agent, e.g. ethyl triacetoxy silane, of which one of the three acetate functions reacts with the hydroxyl group of the polymer, whereby, under the release of one molecule of acetic acid, an additional Si-O-Si (siloxane) bond is formed. In this way, the polysiloxane polymer obtains on both sides of the siloxane chain each time two acetoxy functions, i.e. on each side two reactive end groups. These remaining reactive groups are intended for the reaction with moisture from the environment, after the application of the silicone paste, to form a new siloxane bond between two polymer chains, again under the release of a molecule of acetic acid. Because the cross-linking agent has brought to each end of the original dialkyl siloxane polymer two reactive end-groups, in this way a three dimensional, crosslinked final structure may be formed by the reaction with water or moisture from the environment. Besides this technique based on alkyl-triacetoxy silane, also alkoxy and oxime technologies are known. Furthermore are found benzamide, lactate, and/or enoxy technologies, albeit to a much lesser extent.

During the production of the silicone sealant, usually additional additives such as plasticizers, extenders, fillers, pigments and/or dyes, and adhesion promoters may be incorporated, for a number of reasons. To accelerate the crosslinking in the final application, usually also a catalyst is added.

To ultimately obtain from the production process a paste, which is suitable for readily being applied as the final product, at least one thickening agent is added, most typically silica (SiO₂), in order to change the rheology, whereby the still substantially liquid reaction product stiffens to become a paste, which is substantially a visco-elastic substance. The final paste must then be filled into a suitable container, often a plastic cartridge from which the silicone sealant may be extruded, using some pressure, through a nozzle onto its final destination.

For allowing a proper cross-linking after the application of the sealant, it is important that the two reactive end groups on the siloxane polymer are still available after the application of the silicone sealant from its container to its final destination. They may not have had the opportunity for reacting away, such as during the production, transport or storage of the silicone sealant, i.e. before the sealant is employed in its final application.

It is therefore very important that moisture or water, in whatever form, is prevented from reacting prematurely with the reactive groups of the moisture-sensitive products, in the case of silicone sealants the reactive end groups on the siloxane polymer, such as those which have been provided by the reaction with the cross-linking agent. Such premature reaction of the reactive groups with moisture or water leads to a premature cross-linking of the polymer chains in the mixture, which may lead to a variety of problems. For example, during the production this may lead to the formation of flakes in the final product, i.e. chunks of cross-linked polymer which are no longer reactive, which are disturbing in the application and which may significantly upset the final appearance of the applied paste.

But also during the production, a premature crosslinking may lead to an increased adhesion of the product to the production equipment, which may significantly increase the cleaning costs and the maintenance frequency, and reduce the production capacity of an installation. Also downstream of the production, i.e. during storage and/or transport of the packaged mastic up to the end user, premature cross-linking may occur, by entry of more moisture or water, such that the product becomes unusable. Even after the purchase, i.e. with the end user, this phenomenon may still occur with the risk that the purchased package would not reach the desired and/or prescribed shelf.

The inventors have found that it is very difficult to produce cartridges for which a shelf-life of more than 6 months can be guaranteed. The inventors have found that this problem is caused because, moisture may find in several ways a way into the known methods for the production of moisture sensitive products.

WO 01/49774 A2 describes the production of moisture curable organosiloxane compositions, by mixing polydiorganosiloxanes, which still have reactive end groups, with silane cross-linkers, which react with those end groups. The products were intended as sealant mass. In WO 01/49774 A2 a first set of ingredients was mixed in a small batch mixer (Whip Mix ® Corporation) which is equipped with a vacuum connection. After 1 minute of mixing, filler was added and dispersed for about 1 minute. Subsequently a scraping was performed and again 1 minute of mixing. The final composition was only deaerated at the end of the method, at 50 mm Hg vacuum during 1 minute, before being packaged in Semco® polyethylene cartridges. After packaging the cartridges were centrifuged to remove all trapped air from the packaging. The products were tested after 1 night of aging in their packaging under ambient conditions. In WO 01/49774 A2 the batch mixer is opened repeatedly during the process and the product is deaerated only at the end of the method, just before being packaged into cartridges. After the packaging air (hence also moisture) appears to have remained in the cartridges. A drawback of this method is that each breaking of the vacuum may lead to a premature curing of the polymer chains in the mixture. The shelf-life of the compositions is not determined in WO 01/49774 A2.

WO 2011/051236 A2 describes a method for the production of a moisture curable product. Each one of the examples discloses that the method includes the introduction of polydimethylsiloxane with an OH-end group, several additional ingredients, as well as an amount of methyl trimethoxy silane, which is a cross-linker, into a mixing vessel. After each introduction of an additional ingredient the contents of the mixer is being mixed for some period of time. After the mixing for 5 minutes of the first dose of cross-linker, a vacuum is applied during 10 minutes, for which the mixing vessel must necessarily first be closed. Subsequently, a second dose of cross-linker is added, and a premix of titanium catalyst in more methyl trimethoxy silane. For this addition the vacuum must first be broken. After addition of this second dose of cross-linker, the composition is once again mixed and put under a vacuum. Finally, the composition is packaged. For this purpose, the vacuum must again be broken. A drawback to this method is that the breaking of the vacuum may lead to a premature curing of the polymer chains in the mixture.

The inventors have found that the methods which are disclosed in the state of the art leave things to be desired concerning the shelf life of the cartridges in which the products end up being packaged.

The present invention is concerned with reducing the risk of premature crosslinking of the moisture sensitive products during their production, transportation and/or storage until its final application, mainly for the purpose of extending the shelf life of the packaged end product and/or to improve the stability of the packaged final product.

The present invention aims to obviate or at least mitigate the above described problem and/or to provide improvements generally.

### SUMMARY OF THE INVENTION

According to the invention, there is provided a method as defined in any of the accompanying claims.

In an embodiment, the present invention provides a method, for the production of a moisture curable composition, using a mixing vessel for the production of a prepolymer by the reaction of a reactive polymer with a cross-linking agent, whereby after the introduction of at least one liquid reagent for the reaction or another liquid ingredient of the formulation, the content of the mixing vessel is stirred and the closed mixing vessel is put under a vacuum pressure, whereby the vacuum pressure is at most 0.50 bar absolute (bara), preferably at most 0.40 bara, more preferably at most 0.30 bara, yet more preferably at most 0.20 bara, preferably at most 0.15 bara, more preferably at most 0.10 bara, yet more preferably at most 0.05 bara, preferably at most 0.03 bara, more preferably at most 0.02 bara, and yet more preferably at most 0.01 bara, whereby this vacuum pressure is broken by allowing a gas into the mixing vessel, and whereby the gas is a dried air.

The inventors have found that placing the closed mixing vessel under a vacuum pressure is a fast and convenient way to remove a large proportion of the remaining air from the mixing vessel, with the therein contained humidity, so that this quantity of moisture cannot react with any end-product which may have been left behind in the mixing vessel after the previous batch production, whereby that end-product may cure, and may form undesired flakes. The stirring of the contents of the mixing vessel during the period under reduced pressure ensures a homogenization of the contents of the mixing vessel, and also a smooth reduction of any moisture which may be dissolved in the liquid in the mixing vessel, because the concentration of dissolved moisture may thereby over the entire liquid content remain in equilibrium with the low vapour pressure of water in the gas phase above the liquid level. For this reason, the effect of this feature is more pronounced when the vacuum pressure is set lower, within the equipment. Preferably the equipment is able to achieve the prescribed pressure, but it is not necessary to go further down below at least 0.001 bara or 1 mbar absolute, preferably at least 0.010 bara, more preferably at least 0.025 bara and still more preferably at least 0.050 bara. This brings the advantage that the installation which has provide the vacuum pressure, requires fewer steps in series and may thus be carried out in a simpler way.

The inventors have found that it is desirable to break the vacuum during particular steps in the method according to the present invention. For particular cross-linkers it is desirable to add the cross-linker to the mixing vessel while not under vacuum. This is especially the case for cross-linkers which have a higher vapour pressure and are therefore reasonably volatile, whereby a portion of the cross-linker might escape through the vacuum connection, if this is in operation. Also it is desirable, when adding particular thickeners, such as silica, to keep less or no vacuum pressure within the mixing vessel. Particular thickeners are solids having a very low density. These are readily carried away in a gas stream, such as a gas stream into an operating vacuum connection. The inventors have found that the method therefore should include at least one step wherein the vacuum has to be broken, i.e. that the pressure in the mixing vessel is brought up again from a previously installed vacuum.

The inventors have found that the use of dried air, as opposed to ambient air, for bringing the pressure in the mixing vessel back up from the vacuum pressure installed during an earlier stage of the production batch to the light overpressure during the addition of the cross-linker, in the first place avoids introducing extra moisture into the mixing vessel, whereby thus countering premature curing. In addition, the use of dried air brings the advantage of being safer compared to other gases which might be used for raising the pressure again in the mixing vessel without simultaneously introducing moisture into the mixing vessel, the latter being the problem with the conventional method of breaking the vacuum using ambient air. The exposure of operating personnel to dried air holds less safety risks compared to other gases such as nitrogen or natural gas, because the dried air still contains sufficient oxygen such that there is no risk of oxygen insufficiency, and also because the dried air in itself does not represent a fire risk.

The inventors prefer, after closing the mixing vessel, to decrease the vacuum pressure as soon as practically possible to the prescribed value. As such, the inventors prefer to obtain a vacuum of at most 0.40 bara within 60 seconds after closing the mixing vessel, preferably within 45 seconds, more preferably within the first 30 seconds.

The inventors prefer to reach a vacuum pressure of at most 0.20 bara within a time period of 120 seconds, preferably within 90 seconds, and more preferably within 60 seconds. The inventors have found that this method ensures in a suitable and feasible manner that there will be as little moisture as possible able to react with the final product in the mixing vessel which remained from the previous production batch.

In an embodiment of the present invention the dried air has a dew point of at most -40°C, preferably of at most -45°C, most preferably a dew point of at most -50°C.

After the addition of the cross-linking agent to the reactive polymer in the mixing vessel, the inventors prefer to disperse the cross-linker briefly into the contents of the mixing vessel. During the dispersion, the inventors prefer to maintain a light overpressure in the mixing vessel within the range of 0.05 to 0.30 barg, preferably at least 0.08 barg and/or at most 0.20 barg, more preferably of about 0.10 barg. As such, the inventors avoid the risk that a part of the cross-linking agent may evaporate and might not be able to participate in the reaction. After this dispersion, the inventors preferably allow a time for the reaction, whereby more preferably the mixing vessel is again put under vacuum, preferably a vacuum pressure as prescribed hereinabove.

### DETAILED DESCRIPTION

The present invention will hereinafter be described in particular embodiments, and with possible reference to certain drawings, but the invention is not limited thereto, but only by the claims. Any drawings described are only schematic and are non-limiting. In the drawings, the size of some of the elements may be exaggerated and not drawn to scale for illustrative purposes. The dimensions and the relative dimensions in the drawings do not necessarily correspond to actual reductions to practice of the invention.

The products produced by the method according to the present invention are generally characterized in that they form a pasty substance which, after application, usually locally, and with some degree of precision by pressing them through an outlet mouth, remains in place. For example, the products being mastics or sealants, may after application as an yet uncured paste usually still for some time be rubbed and/ or smoothened, and thereby after curing represent a proper sealing. The product paste before the curing is therefore usually characterized by a very high so-called "complex viscosity" under low shear force. The "complex viscosity" is determined by oscillation, whereby the viscous and the elastic contribution to the rheological response are separable from each other. Under low shear forces the paste preferably behaves substantially as a solid. However, it is desirable that the extrusion of the paste through the outlet mouth does not require excessively high forces. It is therefore desirable that the paste used for the curing under high shear exhibits a lower complex viscosity. The paste product thus preferably exhibits a high shear thinning effect. Under high shear the paste therefore preferably behaves more like a liquid.

But also the properties after curing are important and may vary considerably. From some mastics or sealants it is expected that they remain plastic after curing but therefore have also little ability to recover after deformation. The durably permissible deformation of a "plastic" sealant is usually not higher than 7.5%, meaning that the product may only cope with a distortion of at most 7.5% in order to return to its original situation after removal of the distorting force. A higher distortion causes permanent deformation. Other sealants are expected to eventually show a plasto-elastic behaviour. These sealants have a durably permissible deformation higher than that of plastic sealants, typically of about 12.5%. The majority of the mastics and sealants is however more "elastic", and may (almost) fully recover upon deformations of 20% or more. For example, most of the silicone sealants have an elastic recovery of more than 80%, and often even more than 90%. But also within the elastic sealants there is demand for products having very different properties.

Each product in the family of products produced by the method according to the present invention therefore represents a tight balance between the properties of the uncured paste, and those of the finally-cured product after application. Each time, the combination of properties is a result of careful selection of ingredients and the quantities incorporated thereof. Each ingredient is important, such as the selection of reactive polymer and the nature of the cross-linking agent, but also the whether or not use of other possible ingredients, such as plasticizers, extenders, fillers, thickening agents, additional adhesion promoters, and catalysts.

Within the context of the present invention, with reactive polymers is meant a reactive polymer of silicon oxide, having a backbone formed by alternating silicon and oxygen atoms. Sideways on this linear backbone, on each silicon atom of the silicon oxide polymer, are organic side groups, usually saturated organic groups, and preferably methyl groups such that the reactive polymer is a polydimethylsiloxane. This reactive polymer is a result of a polymerization reaction. Each polymer molecule is characterized by a particular chain length, and a mixture of molecules is generally characterized by a distribution of the chain length across the various molecules. Typically the average chain length of the molecules in a mixture is already sufficient for distinguishing different reactive polymer raw materials. In addition, an average molecular weight (g/mol) may be reported as a characteristic for a polymer composition, whereby, however, a wide spread of the molecular weight over the different polymer molecules in the composition should be kept in mind.

With the same organic side groups, when the average chain length of a reactive polymer or polymer mixture increases, the dynamic viscosity of the polymer or polymer mixture will also increase. The viscosity is expressed in Pascal second (Pa.s). It is therefore common to partially characterize the reactive polymer products by their viscosity. Commonly used reactive polydimethylsiloxanes have a viscosity at 20°C in the range of 20-350 Pa.s, for example those which are referred to as type 20 (20 Pa.s), 50 (50 Pa.s), 80 (80 Pa.s), 120 (120 Pa.s), 150 (150 Pa.s) and 350 (350 Pa.s). Suitable reactive polymers are available under the name Polymer FD from the company Wacker, Xiameter OHX from Dow Corning or Xiameter, Silopren E from Momentive Performance Materials, or Bluesil FLD from Bluestar.

The inventors have found that the reactive polymers having a higher viscosity, and therefore a higher chain length, form softer end products in comparison with the reactive polymers having a lower viscosity.

The polymer molecule stays reactive thanks to the end group, typically at both ends of the backbone, which usually is a hydroxyl group or function. It is with this end group that the cross-linking agent reacts. The cross-linking agent serves the purpose of providing, after the reaction with the end group on the reactive polymer, more than one reactive and available end group.

In the context of the present invention, the reaction product of the reactive polymer with the cross-linking agent is referred to as an end-capped polymer. The reaction of the cross-linking agent with the reactive polymer, whereby in each case a cross-linker molecule attaches itself to one of the reactive end groups of the reactive polymer, is called the pre-polymerization. The ultimate curing under the influence of water or moisture is then the polymerization.

It is the provision of the at least two reactive end groups at each end of the end-capped polymer, whereby the reactive end groups may react with each other under the influence of water, or (air) humidity, which enables the ultimate formation of a three-dimensional structure, called curing or polymerization.

Plasticizers may be added to affect the rheological behaviour of the uncured paste, but also to help adjusting the elasticity and the elastic shape recovery of the cured final product. A proper selection and dosage of the plasticizer may thereby reduce the amount of thickener required for obtaining a desired paste thickness. Suitable plasticizers are for example the so-called silicone oils, being non-reactive silicones, such as polydimethylsiloxane, and which are offered in different qualities having, for example, different chain lengths. The siloxanes are particularly suitable because they offer a high compatibility with the other ingredients of the final product, in particular with the prepolymer. Quite common non-reactive polydimethylsiloxanes have a viscosity at 20°C in the range of 100 mPa.s to 12,500 mPa.s. Such products are a.o. offered as Plasticizer W by the company Momentive Performance Materials, or as Weichmacher by the company Wacker.

Often, at least a portion of the plasticiser may be replaced by a solvent having a high boiling point. Suitable are e.g. hydrocarbons or mixtures thereof having a high boiling range and thus very low volatility. Such products are, for example, offered as Exxsol® D60, D80, D100, D120, or D140, or as Isopar® H, J, K, L, M, N, or V from the company Exxon Mobil Chemical, or Ketrul® D100, Hydroseal® G232H, G240H, G3H , G250H, G270H, G400H, G310H, G315H, G340H from the company Total, or Shellsol® D60, D80, D100 from the company Shell, Pilot 261, 291, 321, 400, 600, 900 from the company Petrochem Carless, or Nyflex 8120, 8131, 800 from the company Nynas.

The choice of the cross-linking agent has an important impact on the properties of the final product.

The inventors prefer as crosslinking agent a compound which is composed of a silicon atom having three reactive groups thereon, and one non-reactive group. The three reactive groups are intended for reacting upon curing, and provide the capability to build the intended three-dimensional network. The selection of the last non-reactive group further contributes to the properties of the final product.

In silicone sealants the inventors use a.o. alkyl triacetoxy silane as the cross-linking agent. These so-called "acetic acid containing" cross-linking agents result in rather "tough-elastic" products, also characterized by some acidity. They are suitable for the majority of end uses without problems, particularly in glazing, sanitary applications, elastic bonding in the glass and metal industry, or for seals in automobiles, boats or caravans. They are less suitable with alkaline substrates such as concrete or cemented substrates, or for particular metals such as copper. The inventors prefer ethyl triacetoxy silane. The methyl, propyl and vinyl equivalent variants are however also known and suitable. The ethyl variaht offers the advantage that it is liquid under standard conditions, so it may readily be processed and incorporated into the composition. Also mixtures of the methyl and ethyl variant are widely used, because most versions thereof are liquid. Often used as "acetic acid containing" cross-linkers are methyl triacetoxy silane, ethyl triacetoxy silane, propyl triacetoxy silane, and mixtures thereof. Suitable products are, for example Cross-linker ES21, ES23, ES24 available from the company Wacker, Cross-linker 3034, 3187 from the company Momentive Performance Materials, Cross-linker MTA, ETA, PTA, ETA/MTA (70/30), PTA/MTA (70/30) from the company Nitro Chemistry, Cross-linker AC 10, 15, 30 from the company Evonik Hanse.

For the sealing of polyvinyl chloride (PVC) plastic materials, alkaline substrates, and porous substrates, the inventors prefer silicone sealants having a rather neutral composition with respect to acids and acid generation, and thus based on other crosslinking agents than triacetoxy silanes. The inventors produce neutral silicone sealants preferably using one or more silanes based on alkoxy, such as alkyl trialkoxy silane, preferably methyl trimethoxy silane or vinyl trimethoxy silane, or with one or more oximes as substituent on the silicon of the cross-linking agent, although benzamide or lactate are also suitable. Amongst the oxime-based crosslinking agents, methyl ethyl ketoxime (methyl ethyl ketone oxime in full, often abbreviated as "MEKO", CH3-CH2-(CH3)C=N-OH) is a well-known substituent. Other well-known substituents for the silicon of a silane cross-linking agent are acetone oxime, MIBKO or methyl isobutyl ketone oxime, and MPKO or methyl propyl ketone oxime.

Suitable oxime-based cross-linkers are methyl tris(MEKO) silane, vinyl tris(MEKO) silane, tetrakis(MEKO) silane, methyl tris(MIBKO) silane, vinyl tris(MIBKO) silane, methyl triacetone oxime silane, ethyl triacetone oxime silane, vinyl triacetone oxime silane, methyl tris(MPKO) silane, vinyl tris(MPKO) silane, and mixtures thereof. Suitable products are e.g. Cross-linker MOS, VOC, TOS, MT10, MT15, VT5, VT2, VT1, LM43, LM100, LM200, LM400, OS1600, OS2600 of the company Nitrochemie, and Cross-linker OX10, OX20, OX30, OX32, OX33 from the company Evonik Hanse.

Suitable alkyl, alkenyl or phenyl trialkoxy cross-linkers are, for example, methyl trimethoxy silane, ethyl trimethoxy silane, propyl trimethoxy silane, vinyl trimethoxy silane, isobutyl trimethoxy silane, phenyl trimethoxy silane, methyl triethoxy silane, propyl triethoxy silane, isobutyl triethoxy silane, vinyl triethoxy silane, phenyl triethoxy silane, octyl trimethoxy silane, octyl triethoxy silane, and mixtures thereof. Suitable products are e.g. Silquest A-1630, Silquest A-171 available from the company Momentive Performance Materials, Geniosil® XL-10 Cross-linker ME60, ME63, Geniosil GF56 from the company Wacker, Cross-linker MTMS (Dynasylan®) VTMO (Evonik) vinyl trimethoxy silane, vinyl triethoxy silane from the company Nitrochemie.

In the mastic an adhesion promoter may also be incorporated. Suitable adhesion promoters are, for example, organo-silanes, preferably aminosilanes or epoxysilanes. Suitable adhesion promoters may e.g. be found in the families of products that are offered as Geniosil® from the company Wacker, as Silquest from Momentive Performance Materials, and as Dynasylan® from Evonik.

Quite suitable as adhesion promoters are e.g. di-tert-butoxy diacetoxy silane for the "acetic acid containing" products, but suitable for neutral products are also 3-aminopropyl triethoxy silane-, 3-aminopropyl trimethoxy silane, N-(2-aminoethyl)-3-aminopropyl trimethoxy silane, 3-(2-amino¬ethylamino)propyl triacetoxy silane, N-(3-trimethoxy¬silylpropyl) diethylene¬triamine, bis-(3-methoxysilylpropyl)-amine, amino¬ ethylamino¬propyl methyl dimethoxy silane, N-(2-aminoethyl)-3-aminopropyl dimethoxy methyl silane, N-(n-butyl)-3-aminopropyl trimethoxy silane, N-(n-butyl)-3- aminopropyl trimethoxy silane, 3-aminopropyl methyl diethoxy silane, amino ethyl amino trimethoxy silane, 3-glycidoxypropyl trimethoxy silane, 3-glycidoxypropyl triethoxy silane, gamma-ureidopropyl trimethoxysilane, 3-aminopropyl (methyl)silsesqui¬oxanes ethoxy terminated, polydimethyl siloxanes with aminoalkyl groups, polydimethylsiloxane reaction products with N-(3-trimethoxysilyl) propyl cyclohexane amine, alkoxy polysiloxanes modified with aminoalkyl groups, multifunctional amino silanes, and functional oligosiloxanes.

Several compounds may serve as thickening agent. The inventors prefer silica as the thickener, also called silicic acid, because of the reinforcing effect silica may have on the product properties. Silicic acid is a weak acid derived from silicon dioxide, SiO₂, having as general formula SiO₂.*n*H₂O, whereby n may differ.

Silicic acid is preferred because it engages into chemical bonds with the backbone of the polymer, bringing a significant enhancement of the physical and mechanical properties of the final product. The inventors have found that various forms of silica may be used as thickener, but the inventors prefer to use fumed silica or "pyrogenic silica" because the desired effects are even more pronounced. It is especially the tear strength of the final product which is increasing. This interaction between the thickening agent and the polymer is much weaker or non-existent with several possible alternatives, and it is therefore also the main reason for the inventors to select silicic acid.

A thickening agent is in many formulations needed for ultimately forming a paste, suitable for being extruded through a nozzle for the application into the desired location. With silicone sealants, the inventors preferably use silicon acid or silica as thickening agent. Suitable thickening agents are e.g. available as HDK® V15, V15A, N20, H13L, H15, H18 from the company Wacker, as Cabosil® L-90, LM-150, M-5, TS-610, TS-622 from the company Cabott, as Aerosil® 130, 150, 200, R972, R974 from Evonik.

Unless one desires a transparent final product, the formulation of the moisture-curing end product may also contain one or more fillers. Suitable fillers are e.g. chalk or dolomite, in finely divided form. These fillers may be obtained by grinding or by precipitation. The filler may also be coated with a suitable coating. Fillers with a coating typically comprise less moisture at the end of their production, and also appear to have a lower tendency for absorbing moisture after their production, such as during storage, handling or transport. Coated fillers may bring a reinforcing effect on the final product, and thus positively affect the mechanical properties of the final product. Suitable fillers are e.g. found in the product family of natural calcium carbonates, precipitated calcium carbonates, calcium-magnesium-carbonates (also known as "dolomite"), which are offered by a wide series of providers, such as Omya, Imerys and Alpha Calcite.

To speed up the final curing, often also a catalyst is added. The catalyst makes the product much more sensitive to moisture. A catalyst is therefore preferably added quite late in the manufacturing process, if possible even as the last ingredient in the formulation, possibly still followed by pigment and/or fungicide. The traditional catalysts were usually based on tin (Sn). More modern catalysts are based on titanium (Ti), preferably in the form of titanates, or bismuth (Bi), and are mainly preferred for ecological reasons. Suitable catalysts may e.g. be found in the following product families: dibutyl tin diacetate, dioctyl tin diacetate, dibutyl tin dilaurate, dioctyl tin dilaurate, dibutyl tin dicarboxylate, dioctyl tin dicarboxylate, dibutyl tin dineodecanoate, dioctyl tin dineodecanoate, dibutyl tin oxide mixtures, dioctyl tin oxide mixtures, tetraisopropyl orthotitanate, titanium acetyl acetonate and other titanium and/or bismuth-based catalysts. There are also suitable catalysts available based on calcium (Ca) and/or zinc (Zn)

Suitable products are e.g. the catalysts which are available under the brand name TIB KAT®, such as types 216, 217, 218, 219, 221, 223, 226, 229, 232, 233, 248, and 318, from the company TIB Chemicals AG.

In an embodiment, the present invention provides a method for the production of a moisture curable composition whereby the product comprises at least one filler, whereby the filler is formed either by grinding or by precipitation, characterized in that the ground filler comprises at most 2000 ppmwt of water, and the precipitated filler comprises at most 8000 ppmwt of water.

The inventors have found that the use of fillers according to the present invention allows to produce sealant having a sufficiently long shelf-life after filling and packaging, and also to keep the risk for flake formation during the production below an acceptable level.

A ground filler is typically a powder having a d50 of more than 1.0 µm, preferably at least 1.5 µm, more preferably at least 2.0 µm, even more preferably at least 3.0 µm, and yet more preferably at least 5.0 µm.

In an embodiment, the present invention provides a method for the production of a moisture curable composition whereby the reactive end groups of a reactive polymer are reacted with a cross-linking agent or cross-linker for forming the prepolymer, characterized in that, in the reaction to form the prepolymer, the cross-linking agent is added in a stoichiometric excess with respect to the amount of reactive end groups present on the reactive polymer.

The cross-linker is a compound having at least three reactive groups, which, during the so-called "pre-polymerization" step provides one reactive group for reaction with a reactive end group of the reactive polymer to form the so-called prepolymer. As a result, at least two reactive groups are left for, later in the application of the paste and under the influence of moisture, forming a three-dimensional structure as part of the curing reaction. The cross-linking agent itself thus necessarily has per molecule at least two, usually three, and sometimes even four reactive groups capable of reacting with moisture.

We found that the amount of cross-linking agent, which is added in excess, performs a useful function as a possible moisture scavenger for when some moisture would prematurely find its way into the prepolymer composition. The remaining free cross-linker is available to react with the premature ingressed moisture, leaving less moisture left for reacting with the prepolymer and thus prematurely lead to some hardening of the composition. The inventors have found that the use of a stoichiometric excess of cross-linker in the pre-polymerization step extends the shelf life of the final product significantly. The excess of cross-linking agent acts as a moisture scavenger during the production of the sealant, during the filling and packaging, but also during the storage, transportation and marketing of the packaged sealant to the end user, and also afterwards, if the end user of the sealant does not use the kit immediately, or only partially and wants to use the remaining amount some time later.

The reactive polymer typically has a straight chain structure, and each molecule has two reactive end groups. During the pre-polymerization each one of these two terminal groups reacts with one molecule of cross-linking agent. The stoichiometric ratio of "cross-linker / reactive polymer" is therefore 2.0: 1. In the method according to the present invention, there is thus preferably added an excess of cross-linking agent, meaning that the molar ratio of "cross-linker / reactive polymer" should be greater than 2.0:1.

Preferably, the applicants use a molar ratio of cross-linker relative to the present number of molecules of reactive polymer of at least 3.0:1.0, preferably at least 5.0:1.0 molar, more preferably at least 10:1 molar, even more preferably at least 12:1 molar, preferably at least 15:1, more preferably at least 18:1, even more preferably at least 20:1, and yet more preferably at least 22:1 molar.

The inventors have also found that an excessively high excess of cross-linking agent may adversely affect the properties of the final product. Therefore, the inventors prefer having a molar ratio of cross-linker relative to the present number of molecules of reactive polymer of at most 60:1 molar, preferably at most 55:1 molar, more preferably at most 50:1 molar, even more preferably at most 45:1 molar, preferably at most 40:1 molar, more preferably at most 35:1, even more preferably at most 30:1, and yet more preferably at most 25:1 molar.

The most appropriate excess amount is however dependent on the ultimate sealant composition, and on the care with which the composition is handled during the mixing and filling, including the additional steps taken to avoid moisture problems.

In a sealant composition with filler, the inventors e.g. prefer to use a higher excess than in a sealant composition without filler. In a so-called "filled" sealant composition, the inventors preferably apply a molar ratio of "cross-linker / reactive polymer" which is at least 20% higher than in a corresponding "unfilled" sealant composition, more preferably at least 25% higher, even more preferably at least 30% greater, and yet more preferably at least 33% higher. As an upper limit for filled sealant compositions the inventors prefer to use not more than a 50% higher molar ratio than in a corresponding "unfilled" sealant composition, preferably not more than 45% higher, more preferably at most 40% higher.

The excess amount of cross-linking agent, or the molar ratio of "cross-linker / reactive polymer", which is most appropriate for use with a particular sealant composition, within a given method and using a particular mixing and filling installation, is therefore ideally determined case by case and empirically.

To determine the molar ratio of "cross-linker / reactive polymer", the applicants take on the one hand the molecular weight of the cross-linking agent, if this is a mixture one uses the number based average molecular weight of the cross-linker mixture. For the reactive polymer, the applicants take the average molecular weight that may be calculated based on the number of recurring monomer units. In case of an OH-terminated polydimethylsiloxane the recurring unit is [-O-Si(CH₃)₂] having weight 74, such that a reactive polymer having 1000 recurring units has 1000 x 74 + 18 = 74018 as average molecular weight. The ingredient parts by weight used are converted using these molecular weights into the number of employed molar units, with which then the molar ratio of "cross-linker / reactive polymer" may be calculated.

Preferably, the ground filler comprises at most 1500 ppmwt of water, more preferably at most 1000 ppm, even more preferably at most 800 ppm and yet more preferably at most 600 ppmwt of water.

A suitable example of a ground filler is ground calcium carbonate (GCC).

The precipitated filler preferably comprises at most 7500 ppmwt of water or moisture, more preferably at most 7000 ppmwt of water, even more preferably at most 6500 ppm, yet more preferably at most 6000 ppm, preferably at most 5500 ppm, more preferably at most 5000 ppmwt, preferably at most 4000 ppm, more preferably at most 3000 ppm, even more preferably at most 2500 ppm, and yet more preferably at most 2000 ppmwt of water or moisture.

A suitable example of a precipitated filler is precipitated calcium carbonate (PCC).

Theoretically, the most suitable filler for the method according to the present invention has no residual moisture at all, and thus comprises less than 1 ppm of water. This level is however practically and economically not very achievable for the producers. The inventors have found that the following lower limits for the water content of the fillers are workable and therefore represent their preference.

Preferably, the ground filler comprises at least 100 ppmwt of water, more preferably at least 300 ppm, even more preferably at least 500 ppm.

With precipitated fillers, the practical and economically feasible lower limit is somewhat higher. Preferably, the precipitated filler comprises at least 1000 ppm water, more preferably at least 1500 ppm, even more preferably at least 2000 ppm.

Allowing in the filler an amount of water, which is small but still acceptable for the process, offers the advantage that the method for the production of the filler may be simpler, which improves the availability of the filler from a wider range of sources and providers, such that a broader choice of options comes available at economically more favourable conditions.

In an embodiment, the method according to the present invention, comprises that the filler is pneumatically transported to the mixing apparatus where the filler is to be mixed into at least one of the liquid ingredients required as part of the final product, wherein preferably the carrier for the pneumatic transport is a gas having a dewpoint of at most 0°C, preferably of at most -10°C, more preferably of at most -20°C, even more preferably of at most -30°C, yet more preferably of at most -40°C, and preferably at most -45 ° C.

Several gases are suitable as carrier for the pneumatic transport, such as natural gas, methane, CO₂ or nitrogen. Preferably, however, the inventors use nitrogen or air for the pneumatic transport. This offers the advantage that the gas is non-flammable, such that the risk for fire or explosion is kept as low as possible, both during transport and in the supply, treatment and removal of the gas.

Even more preferably the inventors use air for the pneumatic transport, whereby, preferably, ambient air is pressurized and dried to the desired dew point before employing the air for the pneumatic transport. The air may e.g. be dried by passing the air over a moisture adsorbent such as a molecular sieve or silica gel.

Preferably, the inventors dry the air by cooling it down to a temperature of at most the required dew point, whereby the excess moisture in the air condenses and may physically be separated off, and whereby a dried air is obtained having a moisture level of at most the desired dewpoint. The advantage of this drying method is that the installation may be operated continuously, and that there is no moisture adsorbent which needs to be regenerated when such agent has become at least partially saturated with moisture.

The inventors determine the dew point of a gas preferably by means of a polymeric sensor, such as the Dewpoint transmitter testo 6740 available from the company Testo Inc., with headquarters in Germany.

The water content of a filler is by the inventors preferably determined using the analytical method according to DIN 51 777, based on a titration according to the Karl-Fischer analytical method and adapted for samples of powders or other solid materials, and is expressed relative to the entire weight of the filler.

In an embodiment of the present invention, the filler is selected from the group consisting of calcium carbonate, preferably ground calcium carbonate (GCC), dolomite, with which a mixture of mainly calcium and magnesium carbonate is meant, and precipitated calcium carbonate (PCC).

In an embodiment of the present invention, the filler is a precipitated filler. Preferably, the precipitated filler has a very small particle size, preferably a d50 of at most 1 µm, more preferably at most 500 nm, even more preferably at most 200 nm, yet more preferably at most 100 nm, and still more preferably at most 80 nm.

In an embodiment of the present invention the filler is coated. The inventors have found that coated versions of fillers comprise less moisture at the end of their production, and also have a lower tendency to absorb moisture after their production, such as during storage, handling or transport. The inventors have also found that coated fillers may strengthen the end product, such that they may positively affect the mechanical properties of the final product. For example, the inventors have found that coated types of filler may provide a higher "Fmax" to the final product. With Fmax is meant the highest tensile strength measured in a tensile test. Beyond the Fmax point on the tensile curve, the sample yields. Fmax is therefore sometimes also referred to as the "tensile strength at break", although with sealants a fracture not necessarily occurs at that point. The inventors have found that this effect on the mechanical properties of the sealant is more pronounced with precipitated fillers, such as coated PCC. The inventors have also found that this beneficial effect is more noticeable in hybrid systems, which as explained above are SMP-based systems.

The inventors have found that by using coated fillers the amount of thickening agent may be reduced in order to obtain a product with a comparable rheology. Under particular circumstances, such as with coated PCC, one may even obtain a suitable paste without the use of a thickening agent.

In an embodiment, the present invention provides a method for the production of a moisture curable composition, whereby a product is filled into a plastic cartridge as final packaging and the cartridge after filling is closed by introducing into the open end of the cartridge a "kolb" or plunger, characterized in that on the inner side of the cartridge, at least on the location where the kolb has to come into contact with the cartridge, is provided a layer of lubricant. The layer of lubricant provides in the first place a good seal between the plunger and the cartridge, such that air or moisture may not readily find its way to the product inside the cartridge, and whereby the shelf life of the filled cartridge is extended. The lubricant layer brings the additional advantage that the plunger may be pushed in more easily and with less force for extruding the product out of the cartridge. In addition, the layer of lubricant reduces the risk that the plunger would turn during the use of the filled cartridge, and that, consequently, air and/or moisture might enter into the cartridge and lead to premature cross-linking of the product inside the cartridge.

The terms "kolb," and "plunger" are in this document used interchangeably and as synonyms for each other.

Preferably, this layer of lubricant has a thickness of no more than 0.20 mm, more preferably at most 0.15 mm, even more preferably at most 0.10 mm, yet more preferably at most 0.05 mm. Optionally, this layer preferably has a thickness of at least 0.01 mm, preferably at least 0.02 mm, even more preferably at least 0.03 mm, yet more preferably at least 0.05 mm, preferably at least 0.07 mm, and more preferably at least 0.10 mm.

Many substances or compositions are suitable as a lubricant for the inner wall of the cartridge.

A preferred requirement is that the lubricant contains little or no water, preferably at most 100 ppmwt of water, more preferably at most 10 ppmwt.

The lubricant preferably also has a low volatility, e.g. expressed as a low vapour pressure at room temperature (23°C), preferably a vapour pressure at room temperature of at most 1.0 hPa, more preferably of at most 0.50 hPa, and even more preferably of at most 0.10 hPa. Suitable lubricants are e.g. silicone oils, but also possibly high boiling hydrocarbons, preferably high boiling saturated hydrocarbons, such as paraffins or isoparaffins, although the lubricating power of these hydrocarbons becomes only sufficiently important at a sufficiently high molecular weight or carbon number, such that a desired fluidity at a given temperature may often better be achieved with branched hydrocarbon chains than with their straight chain variants.

In many cases also suitable as a lubricant for the kolb or plunger is one of the plasticizers which are selected in the formulation of the composition which is filled in the cartridge. The latter are preferred by the applicants because of their compatibility with the composition itself. Mainly for reasons of compatibility, the inventors preferably use in silicone sealants silicone oil to lubricate the kolb. In hybrid and/or PUR-based mastics, as the lubricant is often used the plasticizer which is part of the formulation of the sealant. The lubricant may be liquid at room temperature, or solid. The inventors prefer to use a lubricant which is liquid at ambient temperature (10°C), such that it may be applied at low temperature, with little or no use of heating.

In an embodiment, the lubricant is silicone oil, preferably a non-reactive polysiloxane, more preferably a non-reactive polydimethylsiloxane. The silicone oil brings the advantage that the lubricant is chemically inert and very stable, and also quite compatible with the moisture-sensitive product in the cartridge, particularly if it is a silicone based sealant, or in technically more correct terms siloxane based. In an embodiment, the silicone oil is sprayed or nebulized into the still empty cartridge. In another embodiment, the lubricant is dripped onto the plunger on its way to where it is to be inserted into the cartridge.

In an embodiment, the cartridge has been prelubricated with a thin layer of wax as lubricant, preferably a hydrocarbon wax, more preferably a saturated hydrocarbon wax. The wax may e.g. be a polyethylene wax or a mineral wax obtained from the heavy fractions from petroleum distillation. The wax may also be a triglyceride. The lubricant is preferably applied in the form of an aqueous or solvent-containing dispersion or emulsion. This is then preferably sprayed into the rear end of the cartridge. After application, the water or the solvent evaporates and the wax stays behind to serve as a lubricant when the kolb or plunger is inserted into the cartridge.

In an embodiment, the present invention provides a method for the production of a moisture curable composition whereby the reactive end groups of a reactive polymer are reacted with a cross-linking agent for forming a prepolymer, whereby into a mixing vessel at least a part of the ingredients is introduced and mixed, whereby they react with each other as needed in the mixing vessel and whereby, at least during part of the method, the content of the mixing vessel is put under a vacuum pressure, whereby the mixing vessel is provided with an outlet mouth, and whereby during the filling, the mixing and/or the reaction the outlet mouth is sealed by means of a plastic foil.

The inventors have found that a plastic foil as an additional sealing element may achieve a much better sealing for the vacuum pressure in the mixing vessel as compared to alternatives such as only a rubber sealing ring and/or a closing valve, whereby the risk is reduced that, under the influence of the vacuum pressure in the mixing vessel, ambient air and hence also moisture, may enter through the outlet mouth into the mixing vessel and cause a premature curing of the moisture-sensitive content of the mixing vessel.

The outlet mouth is preferably in addition further closed with a lid, preferably a screwed-on lid, whereby the lid is preferably additionally sealed by means of a sealing ring, preferably a rubber sealing ring. The inventors have found that the plastic foil suitably avoids direct prolonged contact between the sealing ring and the content of the mixing vessel, which reduces the risk of chemical damage to the sealing ring, as well as simplifies the cleaning of the sealing ring and of the lid sealing the outlet mouth.

In an embodiment, to remove the mixed and reacted end product from the mixing vessel, the plastic foil which closes the outlet mouth is removed or punctured. Preferably the puncturing is performed through a suitable valve with which the outlet mouth is connected and through which the mixing vessel is then connected to the filling installation for filling and packaging the content of the mixing vessel. This feature brings the advantage that the possibility for the product in the mixing vessel to come in contact with moisture via the outlet mouth, and the time period during which this contact would be possible, may be reduced substantially.

In an embodiment, the plastic foil consists of a thermoplastic and the thermoplastic foil is heat welded, like a membrane, onto the outlet mouth or preferably onto an additional plastic intermediate piece which is mounted onto the outlet mouth, preferably this intermediate piece being screwed onto the outlet mouth. Preferably, the foil is made of polyethylene (PE). The inventors have found that a welded foil gives a better sealing than possible alternatives, such as gluing or the use of an additional rubber seal. The welded foil is also simpler and more economical because there are no additional elements needed for achieving the sealing, even though the step of welding is an additional step in the overall process. Providing the plastic foil onto an additional intermediate piece brings the advantage that the assembly of the intermediate piece with the plastic foil may be prepared separately, and then may be fitted quickly and easily onto the outlet mouth, such as being screwed, before the lid - with sealing ring - is brought in place. The membrane offers the additional advantage that it may even replace the shut-off valve during the mixing. The use of valves implies the risk that the valve comprises mechanical parts that are not fully vacuum-tight, either by themselves or in combination with other components.

In an embodiment of the present invention the mixing vessel is closed by assembling the mixing vessel and the lid, characterized in that in between the mixing vessel and the lid a sealing ring is provided, and the material of the sealing ring has a Shore A hardness according to ASTM D2240 of at least 30 and at most 80, preferably at least 50. The inventors have found that a sealing ring having these characteristics, when properly used, may provide a good sealing, and this over a long period of time whereby the same sealing ring may be reused several times. The inventors have also found that the risk for damage is lower during manipulation of the ring, both during use and during cleaning between two uses.

Preferably, the material of the sealing ring exhibits a good resistance not only against the ingredients of the mastic, but also against all the intermediate products and against the final product. , the inventors have experimentally found that silicone rubber, polytetrafluoroethylene (PTFE), polypropylene (PP), polyethylene (PE), ethylene / propylene / diene monomer plastic (EPDM) are suitable candidates.

Preferably, however, a sealing ring is used formed from a compound which is a mixture of polypropylene (PP) and ethylene / propylene / diene monomer plastic (EPDM). The inventors have found that this latter compound provides a good chemical resistance against the extenders and solvents used.

In an embodiment of the present invention, the lid of the mixing vessel comprises an inspection window and the mixing vessel comprises an outlet mouth which has temporarily been closed off with a cover, the method comprising the visual observation through the inspection window whether air bubbles rise up through the liquid and whether the air bubbles are originating from a leaking cover on the outlet mouth, characterized in that an elastic sleeve is pulled over the cover on the outlet mouth and its connection with the outlet mouth, preferably a latex glove.

The inventors have found that the pulling of an elastic sleeve over the cover and its connection with the outlet mouth may be performed quite readily, and that this procedure is usually sufficient to stop the intrusion of ambient air into the mixing vessel via the outlet mouth. This avoids a more elaborate procedure in which the mixing vessel may have to be replaced, by transferring the contents of the mixing vessel with its improper sealing cover on the outlet mouth, into an empty, preferably properly cleaned, second mixing vessel. This more elaborate procedure increases the risk of contact with moisture between reactive residue which may be present in the mixing vessel, and therefore the potential formation of undesirable flakes. This intervention may be incorporated as a standard procedure, but may also be reserved for in case a problem occurs when obtaining the set and desired vacuum, whereby the desired value may be obtained more readily without other and more elaborate measures.

In an embodiment of the present invention the method comprises, after the stirring to homogeneous of the liquid in the mixing vessel, containing the reactive polymer, and also after deaerating the closed mixing vessel by putting the vessel under a vacuum pressure, the method comprises the addition into the mixing vessel of the cross-linking agent for reaction with the reactive end groups of the reactive polymer and thereby forming the prepolymer, and possibly on top of that the addition of an extender to the content of the mixing vessel, characterized in that the mixing vessel before and preferably also during the addition of the cross-linking agent is put under an overpressure, preferably under an overpressure of at least 0.1 barg, more preferably of at least 0.2 barg, even more preferably an overpressure of at least 0.3 barg.

The inventors have found that putting the mixing vessel, i.e. its content, under an overpressure before, and preferably also during, the addition of the cross-linking agent, brings the advantage that the risk of losing cross-linking agent in the gas phase, as well as the amount of cross-linking agent that may be lost via the gas phase, may be reduced. This means that more of the added amount of cross-linking agent may be employed usefully, and therefore less excess may need to be added. Because the cross-linking agent is a reactive agent, this feature also brings the advantage that fewer problems may be caused by cross-linking agent which ends up in the exhaust system.

In case at least one of the ingredients of the composition, e.g. a filler, is added by means of pneumatic transport, the overpressure is preferably achieved by the addition of at least one of the gases that are used for the pneumatic transport. It should be noted that a wide range of gases are suitable in this context. However, the inventors prefer to use non-combustible gases such as nitrogen or air. Preferably, the inventors use dried or dry air to obtain this overpressure, for the reasons mentioned elsewhere in this document.

The cross-linking agent may be added by pouring a pre-measured amount thereof through an open manhole or inspection hole in the lid of the mixing vessel. In this case, in accordance with the present invention, the mixing vessel is put under the light overpressure, which falls back to atmospheric pressure when the manhole or inspection hole is opened in order to enable the addition of the cross-linking agent. The mixing vessel is then closed again after addition of the cross-linking agent.

In an alternative embodiment, the cross-linking agent may be pumped into the mixing vessel. In this case, the mixing vessel does not need to be opened, and in accordance with the present invention the mixing vessel is put under a light overpressure, preferably not only before but also during the addition of the cross-linking agent.

When the cross-linking agent has been incorporated into the rest of the fluid contents of the mixing vessel, and the reaction has started, the inventors prefer to install a vacuum pressure in the closed mixing vessel during the reaction of the cross-linking agent with the reactive polymer. This vacuum pressure is preferably at most 0.50 bar absolute (bara), preferably at most 0.40 bara, more preferably at most 0.30 bara, even more preferably at most 0.20 bara, preferably at most 0.15 bara, more preferably at most 0.10 bara, even more preferably at most 0.05 bara, preferably at most 0.03 bara, more preferably at most 0.02 bara, and even more preferably at most 0.01 bara. For reasons explained elsewhere in this document, this vacuum pressure should be at least 0.001 bara or 1 mbar absolute, preferably at least 0.010 bara, more preferably at least 0.025 bara and even more preferably at least 0.050 bara

The inventors have found that the cross-linking agent is more valuable and more volatile than the reactive polymer. By adding the cross-linking agent to a mixing vessel which is put under an overpressure, rather than to a mixing vessel which is put under vacuum pressure, reduces the risk that cross-linking agent, or extender if present, especially if the latter is rather volatile, ends up in the vacuum system which provides the temporary vacuum in the mixing vessel, would become lost and may lead to problems in the vacuum system and the piping leading to it. Another problem which is avoided is that the volatile cross-linking agent, which ended up in the liquid, under the vacuum pressure would evaporate such that the volume of liquid might increase rapidly and extensively, and through which liquid could end up against the inside of the lid of the mixing vessel, which liquid then may participate to a lesser extent in the reaction to form the prepolymer. In addition, any loss of cross-linking agent from the composition represents a loss of shelf life for the composition. The present invention, therefore, also contributes to achieving and/or maintaining the desired shelf-life of the composition.

In an embodiment of the present invention, the rotating speed of the stirrer in the mixing vessel during the reaction of the cross-linking agent with the reactive polymer is limited to at most 300 rotations per minute (=rpm), preferably at most 150 rpm.

The limitation of the rotating speed during the reaction reduces the risk for splashing liquid. The splashing liquid may adhere to the inside of the lid of the mixing vessel, whereby this portion of the liquid does not leave the mixing vessel when it is emptied through the outlet mouth. As a result, this liquid is lost for the batch in production. In addition, this liquid will remain with the lid when the lid is removed from the mixing vessel, upon which the liquid is able to react with humidity and start curing, which gives rise to the formation of undesirable flakes. Reducing the rotating speed during the reaction thus reduces the risk of flake formation. An additional advantage is that through lowering the rotating speed, also energy is saved. A further advantage is that the heating of the contents of the mixing vessel, as caused by the action of the shear forces on the fluid, is reduced.

In an embodiment of the present invention, after mixing of the cross-linking agent into the liquid in the mixing vessel, and preferably only after the dispersion of the cross-linking agent, the mixing vessel is again put under a vacuum pressure, whereby the vacuum pressure is preferably at most 0.5 bar absolute (bara), more preferably 0.3 bara, even more preferably 0.2 bara.

The inventors have found that this reduction of pressure in the mixing vessel, by extraction of gas from the gas phase in the mixing vessel, removes even more moisture from the reacting mixture in the mixing vessel. This moisture might have entered through the manhole or any other opening in the mixing vessel or in the lid, a manhole which is usually provided in the lid of the mixing vessel and which vessel may had to be opened to allow the addition of the cross-linker. Preferably, the cross-linker is added as a quantity of liquid which is first accurately measured, and is then added to the contents of the mixing vessel. If for that purpose the liquid or the content of the mixing vessel must be brought in contact with the ambient air, one preferably works quickly to reduce the length of this exposure.

In an embodiment, the present invention provides a method for the production of a moisture curable composition, which method is operated in batch mode and the production of the prepolymer occurs in a mixing vessel, characterized in that, after obtaining the prepolymer in the mixing vessel, the lid of the mixing vessel is raised and the stirrer and/or scraper is pulled up from the liquid, the mixing vessel is closed off by means of two foils of plastic, whereby the first foil is provided as close as possible against the product and against the upright sidewall of the open mixing vessel, and subsequently the second foil is stretched over the upper rim of the mixing vessel.

The first sheet protects the product in the mixing vessel as well as possible from contact with the air above the first sheet, while the second sheet protects the mixing vessel, and especially the amount of air above the first sheet, as well as possible from the air above and around the mixing vessel. The inventors have found that this double sealing by means of the two properly applied plastic foils provides a quite effective sealing for protecting the water-sensitive prepolymer in the mixing vessel against contact with moisture, and thus against premature curing, during the removal of the filled mixing vessel from under the pulled-up lid, usually including the stirrer and/or scraper attached to the lid, and during the transfer of the full mixing vessel to the filling installation and the connection thereto.

In an embodiment of the present invention, the pulled up stirrer and/or scraper is scraped, preferably manually with a suitable knife, and the scraped product is dropped into the mixing vessel before the mixing vessel is closed with the plastic foils.

This offers the advantage that less product may be left on the stirrer and/or scraper, which product may come into contact with ambient air and thus with the moisture therein, before a new mixing vessel may be provided underneath the lid and the mixing vessel may be closed again with the lid. As a result, the amount of remaining product from the previous production batch, and which becomes mixed with the ingredients of the next production batch, is reduced. Because these ingredients may contain water, and the remaining product is very reactive and starts to cure when in contact with moisture, the scraping off of the stirrer and/or scraper reduces the formation of unwanted flakes in the next production batch.

In an embodiment of the present invention, the inside of the lid is not scraped off.

This offers the advantage that the material which collects against the inside of the lid, and which has therefore had more time and opportunity to already react with moisture, such as moisture from the ambient air that may anyhow be present in the mixing vessel, is not mixed into the finished product in the mixing vessel. This reduces the risk that partially reacted product shows up in the finished product, giving rise to the formation of annoying flakes.

The inventors prefer that this material, which collects against the inside of the lid of the mixing vessel during the production, is removed and disposed of separately from the quality product which is produced and obtained in the mixing vessel. This material may possibly be discarded and packaged as an inferior but yet usable product, but preferably it is discarded as useless and waste.

In another embodiment of the present invention, the pulled up stirrer and/or scraper is not scraped off before the lid is placed again on a new mixing vessel. It is preferred to use this material as recycle material for the next production step, with the same stirrer and/or scraper.

This offers the advantage that less time is taken for removing the mixing vessel with the finalised composition and for bringing it to the next processing step. This allows less time for the finished product in the mixing vessel for coming into contact with the ambient air and with the moisture it comprises.

In an embodiment of the present invention, an amount of desiccant is provided in between the two plastic foils. The desiccant absorbs moisture from the volume of air between the two plastic foils, such that less moisture may find its way into the product in the mixing vessel under the first foil. This brings the advantage that the risk for premature curing of the product in the mixing vessel is reduced before the product may be filled in the filling installation.

According to the inventors, suitable desiccants are silica gel or molecular sieves.

In an embodiment of the present invention, the ambient air between the two plastic foils is at least partially replaced by a dry gas, preferably by nitrogen or dried air, more preferably by dried air, which preferably has been given a dew point of at most -40°C, preferably at most -45°C, more preferably a dew point of at most -50°C.

In an embodiment, the present invention provides a method for the production of a moisture curable composition, whereby the method is operated in batch mode and uses a mixing vessel for the production of the prepolymer, characterized in that the reactive polymer and the cross-linking agent, as well the additional ingredients which are required for the production step in the mixing vessel, are introduced in the closed mixing vessel and react without opening the mixing vessel, and the mixing happens without opening the mixing vessel, and also the product is removed from the mixing vessel without opening the mixing vessel.

The provision that the raw materials for the production of the product may be fed into the mixing vessel, as well as the product may be removed from the mixing vessel, without opening the mixing vessel, brings the advantage that the risk of coming into contact with ambient air, and with the moisture therein, is reduced for the moisture-sensitive ingredients, for the reacting mixture, as well as for the moisture-sensitive product which is formed by the reaction of the reactive polymer and the cross-linker. This advantage is obtained without giving up the flexibility advantage offered by a batch production process compared to a continuous production process. Continuous production processes are suitable for the manufacture of large quantities of a relatively small number of products. With batch production processes, the formulation and the ingredients may each case be adjusted or changed, such that each time a different product may be obtained. The advantage of this invention is therefore to be considered in comparison with a batch production method wherein the mixing vessel is to be opened for either adding one of the ingredients to the mixing vessel content, or for removing the finished product from the mixing vessel.

The advantage obtained with the present invention is particularly important with respect to the amount of reactive mixing vessel product which is remaining inside the mixing vessel after removing the reactive mixing vessel product from the mixing vessel. Thanks to the present invention, that amount of residual reactive mixing vessel product is not offered an opportunity to react with moisture in ambient air, because the mixing vessel remains closed between subsequent production batches. The remaining reactive mixing vessel product is mixed with the ingredients of the next batch, but due to the absence of any significant moisture ingress between two production batches, this reactive mixing vessel product did not have a chance to already start curing, which would otherwise often lead to the formation of flakes. Thanks to the present invention, the risk for flake formation is thus considerably reduced compared to the production batch with a mixing vessel which each time has to be opened for the addition of particular ingredients and/or for removing the product from the mixing vessel.

This invention brings the important advantage that no or very little product remains that is less useful or useless, and which should be considered as waste.

An additional advantage is that the production also requires less human intervention, such as for removing the opened mixing vessel with the finished product from underneath the lid with its stirrer and/or scraper, such as in the typical batch process. This invention allows one operator to control a plurality of mixers, while for a smooth proceeding of a typical batch process one single mixer requires several operators.

A further additional advantage of this invention is that the process may be highly automated, which greatly reduces the risk for human error, and thus increases the reliability of production, primarily in terms of scheduling and product quality.

In an embodiment of the present invention the mixing vessel is closed with a lid and the lid of the mixing vessel is provided with an in height adjustable stirring system such that, without having to open the mixing vessel by lifting the cover, the height of the stirrer may be adjusted relative to the liquid level in the mixing vessel.

The inventors have found that the liquid level of the product in the mixing vessel may change considerably over the entire course of the batch production. For example, the addition of the required amount of the ingredient which is necessary to turn the liquid reaction product into a paste causes a substantial increase in volume, and thus a substantial increase of the liquid level in the mixing vessel. This feature of the present invention brings the advantage that the height of the stirrer may be adjusted each time, in function of what is desirable in each step throughout the course of production, such as with respect to stirring effects, splashing or the prevention thereof, as well as relating to the energy input, which usually also determines the temperature increase caused by the shear forces during the stirring.

In an embodiment of the present invention, the mixing vessel is kept under a vacuum pressure during the addition of the reactive polymer and of the cross-linking agent, preferably also during the addition of the plasticizer and/or the extender, if applicable.

Keeping the mixing vessel under vacuum pressure during the addition of the ingredients brings the advantage that any remaining final product from the previous batch is given as little as possible time and opportunity to react with any moisture which may enter together with these ingredients during the introduction of these ingredients. This feature of the present invention thus reduces the risk for the formation of unwanted flakes of already entirely or partially cured reaction product in the mixing vessel, e.g. during the preparation of the reaction or during the formation of the prepolymer.

In an embodiment of the present invention, a thickener is added to the mixing vessel and the mixing vessel is kept at about atmospheric pressure during the addition of the thickening agent, and, if a vacuum pressure is present in the mixing vessel, this vacuum pressure is broken prior to the addition of the thickening agent.

The inventors prefer to use silica or silicic acid (SiO₂) as the thickening agent, because of its exceptional enforcement effect. Various forms of silica may be used as thickening agent, such as "precipitated silica", but the inventors preferably use so-called fumed silica, because therewith the reinforcing effect of the thickening agent is even more pronounced. The silicic acid is preferably supplied in a solid form, as a powder or as "snowflakes". This solid form of silicic acid is however characterized by a very low bulk density. The ingredient is very light and quite prone for being entrained by a moving stream of gas or air. The inventors have found that the silicic acid might thus readily find its way into the exhaust system assuring the vacuum pressure in the mixing vessel, if the extraction is kept in operation while silicic acid is added into the mixing vessel. The inventors therefore prefer to close the connection of the exhaust system with the mixing vessel before the addition of the silicic acid is started, and also to open this connection again only after the addition of the desired amount of silicic acid to the mixing vessel. During the addition of the silicic acid, the applicants preferably maintain a slight overpressure in the mixing vessel. This overpressure is preferably applied via the supply line through which the silicic acid is added. This overpressure is preferably subsequently released via the weighing installation which assures the correct dosing of silicic acid, such that the excess gas, preferably dry air, may be released via the filter which is provided as part of this weighing installation.

In an embodiment of the present invention a thickener is added to the mixing vessel, preferably silicic acid, and the thickener is brought into the mixing vessel in a pneumatic manner. The inventors have found that pneumatic transport is a quite convenient way for transporting the light but solid thickener in a gas stream, and that at the same time, the added gas may be used for breaking the vacuum pressure, which is preferably maintained during the reaction, at the moment the thickener is added. Preferably the inventors use a stream of air for the pneumatic transport, and more preferably a stream of dried air. More preferably this dried air has a dew point of at most -40°C, preferably at most -45°C, most preferably a dew point of at most -50°C.

The use of air brings the benefit of reduced risk and increased safety for the operating personnel, because air upon release to the atmosphere is non-flammable, as opposed to when a combustible gas would be used such as natural gas, and because air, when being released to the atmosphere, causes no dilution of the oxygen level in the atmosphere in the proximity of the point of release, and, upon remaining in a container, does not represent an environment in which an unsuspecting operator could suddenly face an oxygen deficiency, which may e.g. be the case with nitrogen.

In an embodiment of the present invention the mixing vessel is kept under a vacuum pressure while pumping the product out the mixing vessel.

The inventors prefer to maintain the vacuum pressure in the mixing vessel while pumping out the mixing vessel, in order to also reduce the risk of contact with moisture during that part of the production process.

In an embodiment of the present invention, the arms of the stirrer in the mixing vessel are provided with scrapers extending up to a distance of at most 5 mm away from the sidewalls of the mixing vessel, preferably of at most 4 mm, more preferably of at most 3 mm, even more preferably of at most 2 mm.

The inventors have found that this design of the stirring system, in collaboration with the adjustability in height of the stirring system, offers the possibility to substantially scrape clean the inner side of the side walls of the mixing vessel while the mixing vessel is being emptied, so there is left little or no residual product against the side walls of the mixing vessel when the mixing vessel has been emptied.

In an embodiment of the present invention the lower surface of the stirrer has substantially the same shape as the bottom of the mixing vessel, preferably with a clearance of at most 5 mm, more preferably of at most 4 mm, still more preferably of at most 3 mm and most preferably of at most 2 mm. Preferably the bottom of the mixing vessel is flat, and the lower surface of the stirrer ends up in that same plane.

This brings the advantage that the bottom of the mixing vessel is also scraped off well, and hence less residual product remains after emptying a completed mixing vessel.

In the embodiment of the present invention in which the lower surface of the stirrer has substantially the same shape as the bottom of the mixing vessel, the lower surface of the stirrer is over substantially the entire width additionally provided with a rubber strip.

This brings the advantage that the bottom of the mixing vessel is scraped off even better, and therefore even less residual product may remain after pumping out a completed mixing vessel.

These provisions of scrapers on the stirrer, of close cooperation between stirrer and mixing vessel bottom, and of the additional rubber strip, bring each individually and even more in cooperation the advantage of little cross-contamination between the products of subsequent production batches. An additional advantage is, when the mixing vessel needs anyway to be opened and cleaned, that less waste ends up from the cleaning, thus reducing the waste production of the overall production process. The inventors have found that a batch process using a mixing vessel which is at least partially filled before the lid is closed, which mixing vessel full of finished product also has to be opened for bringing and connecting it to the filling installation, is usually characterized by about 2% production waste. The inventors have found that the production waste may be reduced down to less than 0.5% of the total production volume.

In an embodiment of the present invention is provided on every one of both arms of the stirrer at least one upwards pointing paddle ending in a point forming an angle of at most 45 degrees, which corresponds to at most one eighth of a full circle. Preferably both arms are each equipped with at least two such paddles, more preferably at least four, even more preferably at least six, preferably at least eight, more preferably at least 12, even more preferably at least 14 upwards pointing paddles.

Preferably these paddles have a point angle of at most 30 degrees.

The inventors have found that the upwards pointing paddles on the arms of the stirrer contribute significantly to a good and fast dispersion of powders in the liquid contents of the mixing vessel. This is especially advantageous when dispersing the thickener. The paddles assure a quick disappearance of so-called grains which readily form when the thickener is added into the mixing vessel.

In the embodiment of the present invention with the upwards pointing paddles on the arms of the stirrer, these paddles are preferably provided on the outer 60% of the length of the stirrer arm, preferably on the outer 50% more preferably on the outer 40%, and even more preferably on the outer 30% of the length of the stirrer arm. This brings the advantage that for the same rotating speed, the tip speed of the upwards pointing paddles is higher, which has a beneficial effect on the rate at which a powder such as the thickener may be dispersed into the contents of the mixing vessel.

In an embodiment of the present invention is provided on each of the arms of the stirrer in the mixing vessel at least one upwards pointing paddle, forming an angle with the longitudinal axis of the stirrer arm which is less than 90 degrees or a quarter circle. Preferably the angle between the paddle and the longitudinal axis of the stirrer is at most 60°, more preferably at most 45°, even more preferably at most 30°.

The inventors have found that the paddles on the stirrer arms assure a central vortex during stirring, by which a powder is incorporated much faster into the content of the mixing vessel. The inventors have found that this effect is stronger when the paddle makes a smaller angle with the longitudinal axis of the stirrer.

Preferably, these paddles are provided on the inner 50% of the length of the stirrer arm, preferably on the inner 40% of the length of the stirrer arm. The inventors however prefer to bring these paddles not closer to the stirrer axis than 20% of the length of the stirrer arm. The inventors have found that this is the best way for developing a proper vortex, and whereby during the stirring an intense internal fluid circulation is generated from the centre of the mixing vessel towards the outside, then up along the sidewalls, at the top turning towards the inner side for returning down more centrally and taking the added powder along in its flow.

In an embodiment of the present invention, several of the different ingredients are added simultaneously into the mixing vessel, while the stirring is already operating.

By introducing in parallel instead of successively several ingredients into the mixing vessel, such as the reactive polymer, the plasticizer and possibly the extender, and by at the same time stirring the liquid already present in the mixing vessel, a lot of time is saved in the overall production process, always in comparison with a conventional batch procedure in which the ingredients are successively introduced into an open mixing vessel and may only be stirred when the lid with stirrer is put onto the mixing vessel, the mixing vessel thus being closed and the pressure only then possibly being lowered in order to, as much as possible, allowing to remove air and moisture from the gas phase as well as the air and the moisture which may have remained dissolved in the introduced liquid ingredients.

In an embodiment of the present invention the product is pumped out of the mixing vessel into a buffer tank before the product is filled into its final packaging.

The inventors have found that the use of a buffer tank allows a quick emptying of the mixing vessel such that it becomes available for the next production batch. The use of multiple buffer tanks permits the production with greater flexibility in the same mixing vessel or mixing machine of a wide product range. As such, thanks to multiple buffer tanks, one may readily switch in the same mixing vessel between successive production of two final products having the same colour but different viscosities, or with different plasticizers or a difference in plasticizer amount, or with different extenders or a difference in the amount of extender, or with different filler or with a different filler content. Even switching from a batch of transparent finished product to a subsequent batch of a coloured end product or a product with filler may be performed quite easily without many special interventions thanks to the buffer tanks. The use of buffer tanks along with the closed mixing vessel brings the advantage that after a previous production batch one may switch much faster to a subsequent production batch, which may significantly boost the production volumes or production capacity of the mixing vessel.

In the embodiment of the present invention which uses a buffer tank for receiving the product from the mixing vessel, the product is preferably pumped out of the buffer tank and a pigment and/or a fungicide is mixed into the product downstream of the buffer tank, before the product is filled into its final packaging.

The mixing of pigment and/or fungicide into the product on its route to the filling installation allows the production and final packaging of a wide range of different final products starting from a few base products which may e.g. still differ in terms of their content of plasticizer, extender and/or filler.

Pumping the product from the buffer tank to the filling installation is preferably done using a piston pump. For the mixing in of the pigment and/or the fungicide, preferably is made use of a static mixer.

In the embodiment of the present invention which uses a buffer tank to receive the product from the mixing vessel, the product in the buffer tank is preferably a transparent product and the product is pumped out of the buffer tank, and the desired amount of filler is mixed into the product downstream of the buffer tank, before the product is filled into its final packaging.

The mixing in of the filler into the product on its route to the filling installation allows for the production and packaging of a number of different end products starting from one and the same transparent base product. These products may then differ in their selection and/or amount of filler.

The filler addition into the product on its route from the buffer tank to the packaging is preferably combined with the similar mixing in of pigment and/or fungicide, i.e. also into the product on its route from the buffer tank to the packaging.

In an embodiment of the present invention at least one, and preferably all, of the liquid ingredients of the production procedure, before being transferred to the mixing vessel, are preferably kept in separate feed tanks in which the atmosphere above the liquid consists of dried air. Preferably, the dried air which is supplied to the feed tank has a dew point of at most -40°C, preferably of at most -45°C, more preferably a dew point of at most -50°C.

This feature brings the advantage that the liquid ingredients of the production batch or production procedure have less opportunity to unintentionally absorb moisture before being introduced into the mixing vessel. This means that less moisture needs to be removed from the mixing vessel to prevent moisture leading to premature curing of the formed end product and also of any end product remaining from the previous production batch in the mixing vessel and on the stirrer after the introduction of the ingredients for the new production batch.

In an embodiment of the present invention the reactive polymer and cross-linker are being pre-mixed on their route to the mixing vessel.

This brings the advantage that the cross-linker and the reactive polymer are at least partially mixed before they arrive in the mixing vessel, whereby they also may already have started reacting with each other, and whereby less extra time is required for the further mixing of these two reagents, and/or for the further reaction of these two reagents to form the target moisture-curable product. This feature brings the advantage that the reaction between the two reagents occurs without any dilution by another non-reacting ingredient, such as the plasticizer and/or the extender. By performing this reaction undiluted, the reaction rate is also increased in comparison with the conventional method where the reaction takes place in the presence of an amount of plasticizer and/or extender.

Preferably this premixing is performed using a static or a dynamic mixer, more preferably a dynamic mixer which is characterised by a particular residence time. A dynamic mixer is a mixer whereby external energy may be supplied to the mixing mixture by subjecting this to shear forces. Preferably these shear forces are also controllable and adjustable. The inventors prefer a dynamic mixer over a static mixer because they found that the pressure drop across the mixer itself is lower, such that the passing requires less energy. The applicants preferably make use of the Dynamic Inline Mixer Type DLM/S-330 offered by INDAG Maschinenbau GmbH (DE).

The inventors prefer to perform the premixing even before the mixture of reactive polymer and cross-linker is stored for some time in a buffer tank upstream of the mixing vessel.

This feature brings the further advantage that even more time may be saved from the reaction time still required in the mixing vessel itself. Preferably the prepolymer reaction has substantially and more preferably almost entirely taken place before the prepolymer arrives in the mixing vessel, such that in the mixing vessel no extra time must be allowed for completing the reaction.

In the embodiment of the present invention in which the reactive polymer and the cross-linker are premixed to an at least partially end-capped polymer before this prepolymer is introduced into the mixing vessel, the at least partially end-capped polymer is preferably introduced into the mixing vessel via the lower end of the vessel. The inventors thereby prefer that the reaction between the reactive polymer and the cross-linker has already taken place as completely as practicable possible before the prepolymer reaches the mixing vessel.

Usually the ingredients are introduced into the mixing vessel through an opening in the lid or the upper wall of the mixing vessel. This feature of the present invention brings the advantage, in comparison with the conventional introduction through an opening in the upper wall of the mixing vessel, that there is a much lower risk of splashing of this end-capped polymer, which may adhere to the upper side of the equipment, such as the inner surface of the lid or the upper part of the stirrer system. End-capped polymer which becomes attached to these places may, when the thickener is introduced, which is light and readily flies up, take up a part thereof, whereby that end-capped polymer stiffens quickly into a paste and therefore may no longer run down and fall back into the liquid in the mixing vessel. This would therefore increase the amount of residue that remains in the mixing vessel from one production batch to the next, the so-called "cross-contamination". By this feature of the present invention the amount of cross-contamination between different production batches is thus strongly reduced, as well as the amount of residue which remains when opening the mixing vessel for cleaning, and which thus must be discarded primarily as waste.

In an embodiment of the present invention a thickener is introduced into a chamber wherein the already at least partially, and preferably the relatively completely end-capped polymer is introduced gradually by pushing the prepolymer through a narrow elongated opening or slot, such that a liquid curtain is formed.

This way of gradually bringing together thickener and the already end-capped polymer brings the advantage that the curtain of prepolymer makes a large surface available for absorbing the thickener. This advantage is particularly pronounced when employing silicic acid as a thickening agent, particularly in a form which is light and flies up easily, such as in the form of powder or snowflakes. Due to the large surface area the thickener readily and quickly finds its way into the liquid with the prepolymer of which the rheology must be changed to form a paste.

This bringing together may be performed by pumping around the end-capped polymer from the mixing vessel into the chamber where it is brought into contact with the thickener, after which the mixture is routed back to the mixing vessel.

In the embodiment of the present invention wherein the reactive polymer and the cross-linking agent are premixed, the thickener is preferably added to the premixed intermediate, preferably the at least partially end-capped polymer, on its way to the mixing vessel.

Preferably prior to the addition of the thickener, an amount of solvent, extender and/or plasticizer is added to the prepolymer.

The inventors have found that the addition and incorporation of a solvent, extender and/or plasticizer is much easier before the thickener is added as compared to afterwards, because the viscosity of the prepolymer without thickener is much lower than that of the same prepolymer containing an amount of thickening agent, making the stirring to obtain a proper blending easier and less energy demanding. The inventors have further found that less thickener is required to achieve a particular viscosity when the plasticizer and/or extender is added prior to the thickener in comparison with adding the plasticizer and/or extender after the thickener.

In the embodiment of the present invention in which the thickener is added to the already at least partially end-capped polymer, the mixture from the introduction of the thickener preferably passes over an intermediate mixer, preferably a dynamic intermediate mixer because of the benefits cited before of adjustability and lower pressure drop, such that the thickener becomes even better dispersed in the liquid containing the prepolymer.

This feature brings the advantage of obtaining faster a good dispersion of the thickener in the liquid such that the pressure in the mixing vessel may also be reduced earlier without increasing the risk that undispersed thickener may be entrained in the exhaust system providing the vacuum pressure. That way the following steps in the production procedure may also be brought forward in time, such that the overall residence time in the mixing vessel is reduced and in the same mixing vessel a higher throughput may be achievable.

In an embodiment of the present invention in the mixing vessel an intermediate product is produced without filler, which may possibly first be transferred to a buffer tank, and the filler is only added to this intermediate product on its way to the filling installation.

This feature brings the advantage that the same product in the mixing vessel and/or the buffer tank offers the possibility to produce several different products. On top of the choice to add no, little or more filler to the same product from the mixing vessel, there remains the opportunity to give different colours to technically the same final product, or to adapt the amount of filler in the final product to the nature and amount of the dye or dye mixture which one desires to use in a particular final product, or conversely to match the amount of dye to the amount and nature of the filler.

Preferably the inventors add the filler as a slurry or suspension of the filler in a carrier. This is particularly convenient if the filler is being added to the product on its way from the mixing vessel to the filling installation. In this embodiment suitable carriers are best chosen from silicone oil or extender.

### EXAMPLES

The following examples are developed in more detail to illustrate the present invention. The examples describe the production and packaging of the following silicone sealants in accordance with the following recipes:

**Table 1**

| **Ingredient (wt parts)** | **Detail** | **EX 1** | **EX 2** | **EX 3** |
|---|---|---|---|---|
| Reactive polymer | Polymer FD 80 | | | 60 |
| | Polymer FD 120 | 36 | | |
| | Silopren E80 | | 56 | |
| Plasticizer | Silopren W100 | | 28.45 | |
| | Silopren W1000 | 21.9 | | 12 |
| Extender | Exxsol D140 | - | | 15 |
| Cross-linker | ES23 | | | 4 |
| | LM43 | 5 | | |
| | Silopren TP 3625 | | 3 | |
| Stabilizer | Silopren TP 3626 | | 0.25 | |
| Thickening agent | Aerosil® 150 | 6 | | 8 |
| | HDK®H15 | | 10.5 | |
| Filler | Microdol A1 | 30 | | |
| Adhesion promoter | Haftvermittler DBS | | | 1 |
| | Silquest A-1100 | 1 | | |
| | Silquest VX-225 | | 1.4 | |
| Catalyst | Dibutyl tin diacetate | | | 0.025 |
| | Tib Kat 217 | 0.1 | | |
| | Silopren TP 3560 | | 0.4 | |

Example 1 (EX 1) produces a filled sealant based on an oxime cross-linker. Example 2 (EX 2) produces in the mixing vessel a transparent sealant based on an alkoxy cross-linker. Example 3 (EX 3) is for a transparent sealant with acetoxy-based cross-linker.

Polymer FD 80 and FD 120 were obtained from the company Wacker (DE). Polymer FD 80 and Silopren E80 had an average molecular weight of 70318 g/mol. Polymer FD 120 had a molecular weight of 81418 g/mol. Silopren E80 and W100, and Silopren W1000 were obtained from the company Momentive Performance Chemicals. Exxsol® D140 was obtained from the company ExxonMobil Chemical.

Cross-linker ES23 was ethyl triacetoxy silane obtained from the company Wacker, having a molecular weight of 234,28 g/mol. Cross-linker LM43 was a mixture of primarily aceton-oxime en butane-2-one O,O',O"-(methylsilylidyn) trioxime, supplemented with a small amount of methyl trimethoxy silane. The cross-linker was obtained from the company Nitrochemie, and had an average molecular weight of 259.9 g/mol. The cross-linker Silopren TP 3625 was vinyl trimethoxy silane (VTMO) obtained from the company Momentive Performance Chemicals, and had a molecular weight of 148.23 g/mol.

Adhesion promoter ("Haftvermittler") DBS was di-tert-butoxy-diacetoxy silane, which was obtained from the company Wacker. Silquest A-1100 was 3-aminopropyl triethoxy silane which was obtained from the company Momentive Performance Materials. Silquest VX-225 was an aminofunctional oligosiloxane which was obtained from the company Momentive Performance Materials.

Stabilizer Silopren TP 3626 was 2-ethylhexyl dihydrogen phosphate, obtained from the company Momentive Performance Chemicals. This compound is a good stabilizer for example e.g. a tin catalyst, but it is also active as a catalyst for the end-capping reaction, i.e. the reaction of the cross-linker with the reactive polymer.

AEROSIL® 150 was a pyrogenic form of silicic acid obtained from the company Evonik and HDK® H15 was a pyrogenic form of silicic acid obtained from the company Wacker.

The Microdol A1 was a ground dolomite (Ca/Mg carbonate) obtained from the company OMYA AG. This product had a water content of +/- 1000 ppm weight, and was not coated.

The dibutyl tin diacetate was obtained from the company Momentive Performance Materials. The TIB KAT® 217 was a dioctyl tin oxide based catalyst, which was obtained from the company TIB Chemicals. The Silopren TP 3560 was also a dioctyl tin based catalyst, which was obtained from the company Momentive Performance Materials.

### EXAMPLE 1: PRODUCTION OF A SILICON SEALANT BASED ON AN OXIME-CONTAINING CROSS-LINKER

A clean mixing vessel on wheels was brought in. On the lower end of the mixing vessel was provided a drain opening having an outlet mouth. This opening was closed off by means of a screwed on cover, provided with a rubber sealing ring fitting the drain opening. Between the metal of the drain opening and the cover with its rubber sealing ring was provided a plastic foil made of polyethylene, which avoided that the sealing ring would come in prolonged and direct contact with the contents of the mixing vessel. This avoided possible chemical damage to the sealing ring, and also avoided that the cover with its sealing ring had to be cleaned after each use.

Onto the outlet mouth of the drain opening is mounted, in case of less viscous products than in this example, preferably one piece of pipe with on the free end thereof an extra plastic foil of a thermoplastic such as polyethylene, whereby the foil is heat welded onto the free end and sealing the free end tightly. Onto the free end which is closed off in this way, for emptying the mixing vessel, is then mounted the drain valve. As drain valve a ball valve is used, such that an operator may puncture the plastic foil through the opened ball valve.

The clean mixing vessel was brought onto a weighing scale. Into the open mixing vessel were loaded successively the prescribed amounts of reactive polymer, of the plasticizer, and if dictated by the recipe, also of the extender, on the basis of the increase in the total weight of the mixing vessel with its contents. If necessary the pigments and other ingredients other than adhesion promoters, cross-linkers, and catalysts are now also added. The amounts of these additional ingredients, however, are much smaller than the total liquid content formed by the prepolymer with the plasticizer and possibly the extender. The ingredients other than prepolymer, plasticizer and extender are therefore preferably introduced on the opposite side of where the drain opening of the mixing vessel is located. This brings the advantage that the risk is kept as small as possible for an important part of one of these ingredients ending up in the drain opening and not becoming well mixed with the rest of the content of the mixing vessel.

The clean mixing vessel with its content is brought underneath the lid with stirrer. The lid is adapted to fit onto the mixing vessel by means of a sealing ring made from a silicone compound and having a hardness of 60 Shore A and a rectangular profile of 20x15 mm. The inventors have found that this material is sufficiently chemically resistant to the different ingredients, as well as those of the end product, and also have the correct combination of hardness and elasticity.

The lid is further provided with a stirrer system, rotatable around a vertical axis, which hangs and protrudes from underneath the lid. The stirrer system consists primarily of at least one rotor, preferably of two rotors, also referred to as "dissolver", mounted at the lower end of a vertical axis. On the axis at least one mixing wing may be located at a height of choice.

The lid with stirrer system was placed onto the mixing vessel. If visually observed through the peephole that a wing is not located at the appropriate height relative to the fluid level in the mixing vessel, the lid is pulled up again and the location of the wing on the axis is adjusted. The mixing vessel was then closed by lowering the lid onto the mixing vessel.

The stirrer system was activated to homogenise the contents of the mixing vessel. Approximately at the same time, the vacuum system was activated and a vacuum pressure of about 0.2 bara was installed inside the mixing vessel. Through the inspection window in the lid, it was visually inspected that no gas bubbles were coming up through the liquid, and thus that the drain opening was closed off properly. If it was determined that the drain opening was not properly closed off, the operator pulls a latex glove over the cover on the outlet mouth, including over its connection with the outlet mouth.

When the contents of the mixing vessel had been mixed well, the vacuum installation was stopped. The vacuum in the mixing vessel was broken and an overpressure was installed of about 0.3 barg by allowing compressed air having a dew point of -50°C.

The correct amount of cross-linker was weighed off in advance and was slowly added to the contents of the mixing vessel while the stirrer continued operating. The cross-linker was added through the manhole in the lid.

Before the addition of the cross-linker, the stirring speed was reduced to 150 rpm, and this rotating speed was maintained also later during the prescribed reaction time. After adding the cross-linker the manhole was closed again and the mixing vessel was brought back under a vacuum pressure of 0.2 bara, until the end of the reaction time. To allow the reaction of the cross-linker with the reactive polymer, the reaction is typically allowed to proceed during a time period of 10 minutes. Subsequently, the vacuum pressure was broken again, using dried air having a dew point of - 50°C, up to an overpressure of about 0.3 barg. The stirring was maintained.

Through the manhole, which was opened again, was then added the prescribed amount of thickener. This thickener may be added through the reopened manhole, e.g. by emptying bags in which the thickener was supplied. The inventors however prefer to add the thickener pneumatically, from a storage vessel using a membrane pump. In both cases the inventors prefer to not set up any vacuum during the addition of the thickening agent. During the addition of the thickening agent, the volume in the mixing vessel was increased. By the stirring, the thickener became dispersed throughout the contents of the mixing vessel.

After the dispersion of the thickener, the prescribed amount of filler as well as the adhesion promoter was added and mixed in. After the addition and during the mixing again a vacuum pressure of 0.2 bara was set up in the, again closed, mixing vessel, and the stirring was continued until the contents of the mixing vessel had become homogeneous and there were no grains left anymore, and preferably also no flakes were present in the mixing vessel content.

As a last ingredient, in a next step the catalyst was added, again through the open manhole and after breaking the vacuum pressure with dry air as explained above. Then again a vacuum pressure of about 0.2 bara was installed and stirring was continued. The vacuum removes together with traces of moisture also as much as possible dissolved air from the product, so that the risk of forming gas bubbles is reduced during later production steps, during the storage or during the use of the sealant.

After this last mixing period the vacuum pressure by broken by allowing dry air in having a -50°C dew point. A sample was taken for standard quality control. After approval of the key characteristics the lid (with the attached stirrer) was pulled up. Because the next production batch in this mixing installation concerned product of the same quality, only the bottom of the scraper was scraped off with a scraping knife, whereby the scrape result was collected into the full mixing vessel. Then the full mixing vessel was driven away from underneath the lid with stirrer and a new clean mixing vessel was brought in, containing preferably already the necessary amounts of reactive polymer and plasticizer.

Upon the pasty content of the full mixing vessel was then laid a first plastic foil and pressed against the product and with its perimeter pressed against the sidewalls above the product level. A second plastic foil was then stretched across the mixing vessel to close off the upper opening of the mixing vessel. In the space between the two plastic foils may be provided, if desired, such as in hot weather, a small amount of active desiccant in solid form.

The full mixing vessel was driven underneath the press of the filling installation and connected thereto via the outlet mouth of the mixing vessel. The product was filled into plastic cartridges which were closed off by placing a kolb or plunger in the open end of the cartridges after filling. The plastic cartridge was on the inner side, where the plunger was to come in contact with the cartridge, pre-lubricated by providing a layer of a heavy hydrocarbon wax, preferably a wax which by hydrogenation was made more stable against the influences of oxygen and/or UV radiation, preferably a layer having a thickness of about 0.10 mm. This wax may have been applied in every way known to the skilled person. The wax may be sprayed in molten form as a hot liquid, in solution in a more volatile organic solvent, or as an emulsion in a carrier. Such an emulsion may even be water-based, whereby the water readily evaporates and is no longer annoying or even present to an extent that it may affect the content of the cartridge.

### EXAMPLE 2: PRODUCTION OF A SILICONE SEALANT BASED ON ALKOXY-CONTAINING CROSS-LINKER

The same process was followed as in Example 1, with the following adjustments. This product was to be transparent, and therefore there was no filler used. This formulation also contained a stabiliser. The stabiliser was added after the mixing in of the cross-linker, after which again during 3 minutes the mixing was continued. The selected stabilizer is also active as a catalyst for the reaction between cross-linker and reactive polymer, so it is added to the mixing vessel preferably as soon as possible after the cross-linker to shorten the reaction time. During each addition in each one of the examples one preferably maintains a slow rotating speed to promote the incorporation of the added ingredient.

### EXAMPLE 3: PRODUCTION OF A SILICONE SEALANT BASED ON AN ACETOXY-CONTAINING CROSS-LINKER

In a closed mixing vessel a vacuum pressure of about 0.2 bara was installed. The mixing vessel was equipped with a height-adjustable stirrer system, whereby the stirrer was provided with scrapers reaching up to a distance of at most 2 mm away from the side walls of the mixing vessel, and was further provided with additional surfaces to cause more turbulence in the bulk of the liquid contents of the mixing vessel.

In a buffer tank with weighing equipment was first added from a feed tank the prescribed amount of reactive polymer. Also the plasticizer, the extender and the cross-linker were supplied from feed tanks. The feed tanks were continuously kept under an atmosphere of air having a dew point of -50°C.

The polymer from the buffer tank and the ingredients from the feed tanks, the latter under Coriolis flow control to enable a correct dosing, were routed simultaneously into the mixing vessel under vacuum pressure, and this while the stirrer was operating.

After the reaction of the cross-linker with the reactive polymer, the vacuum was broken and a light overpressure of 0.05 barg was installed, after which the prescribed amount of thickener was added and dispersed in the liquid. The thickener was pneumatically introduced using as the carrier an air flow having a dew point of -50°C.

During the dispersion of the thickener, the mixing vessel content was again put under a vacuum pressure of about 0.2 bara. After dispersing the thickener, the adhesion promoter and catalyst were added and mixed in. After completion of the mixing procedure, the mixing vessel was emptied by pumping the content to a buffer tank, and this while the vacuum pressure was maintained. During the emptying the stirrer was used to scrape substantially clean the inner walls and the bottom of the mixing vessel.

Afterwards the buffer tank was put under pressure using a movable pressure plate which has been provided therein and the contents of the buffer tank were pumped towards the filling installation using a piston pump. On its way to the filling installation where the paste was filled into its commercial packaging, if desired, the filler, more particularly in the form of a slurry using some of the plasticizer as carrier, the pigment, and if desired also a fungicide, may be injected in-line and blended using a static mixer.

Further details were carried out as described in example 1, except that the mixing vessel in this example always remained closed, i.e. the lid remained on the mixing vessel and no manhole or opening to the ambient air was created.

After the mixing vessel having been emptied, the next production batch was immediately started by introducing new amounts of ingredients into the mixing vessel.

Having now fully described this invention, it will be appreciated by those skilled in the art that the invention can be performed within a wide range of parameters within what is claimed, without departing from the scope of the invention, as defined by the claims.

## Claims

1. A method for the production of a moisture curable composition, using a mixing vessel for the production of the prepolymer by the reaction of a reactive polymer with a cross-linking agent, whereby after closing the mixing vessel and the introduction of at least one liquid reagent for the reaction or another liquid ingredient of the formulation of the product, the content of the mixing vessel is stirred and the closed mixing vessel is at least temporarily put under a vacuum pressure, whereby the vacuum pressure is preferably at most 0.40 bar absolute (bara), and optionally at least 0.001 bara or 1 mbar absolute, whereby the vacuum pressure is decreased to a vacuum pressure of at most 0.40 bara within 60 seconds after closing the mixing vessel, whereby this vacuum pressure is broken by letting a gas into the mixing vessel, and whereby the gas is dried air having a dew point of at most -40°C.

2. The method according to claim 1 whereby the dried air has a dewpoint of at most -45°C, preferably a dewpoint of at most -50°C.

3. The method according to claims 1 and 2 whereby the cross-linking agent is added to the mixing vessel, **characterized in that** the cross-linking agent is dispersed into the content of the mixing vessel and during the dispersion a light overpressure is maintained in the mixing vessel in the range of 0.05-0.30 barg.

4. The method according to any one of the preceding claims whereby the rotating speed of the stirrer in the mixing vessel during the reaction of the cross-linking agent with the reactive polymer is limited to at most 300 rotations per minute.

5. The method according to any one of the preceding claims whereby, after mixing of the cross-linking agent into the liquid in the mixing vessel, and preferably only after the dispersion of the cross-linking agent, the content of the mixing vessel is put under a vacuum pressure, whereby the vacuum pressure is preferably at most 0.5 bar absolute (bara).

6. The method according to any one of the preceding claims whereby the reactive polymer is reacted with the cross-linking agent in the mixing vessel and whereby, after the stirring to homogeneous of the liquid in the mixing vessel, which is containing the reactive polymer, and also after deaeration of the closed mixing vessel by putting the content of the vessel under a vacuum pressure, the method comprises the addition into the mixing vessel of the cross-linking agent for reaction with the reactive end groups of the reactive polymer and thereby forming the prepolymer and possibly on top of that the addition of an extender to the content of the mixing vessel, **characterized in that** the content of the mixing vessel before and preferably also during the addition of the cross-linking agent is put at an overpressure, preferably at an overpressure of at least 0.1 barg.

7. The method according to the preceding claim whereby at least one of the ingredients of the composition, for example a filler, is introduced by means of pneumatic transport, **characterized in that** the overpressure is reached by the addition of at least one of the gasses which is employed for the pneumatic transport.

8. The method according to any one of the preceding claims using the mixing vessel for the production of the prepolymer by the reaction of the reactive polymer with the cross-linking agent, whereby after the introduction of at least one liquid reagent for the reaction or another liquid ingredient of the formulation, the content of the mixing vessel is stirred and the content of the closed mixing vessel is put under a vacuum pressure, whereby the vacuum pressure is at most 0.50 bar absolute (bara).

9. The method according to the preceding claim whereby the mixing vessel is closed and a vacuum pressure of at most 0.40 bara is installed inside the mixing vessel within 45 seconds after closing the mixing vessel.

10. The method according to any one of the preceding claims whereby the method is operated in batch mode and uses the mixing vessel for the production of the prepolymer, **characterized in that** the reactive polymer and the cross-linking agent, as well the additional ingredients which are required for the production step in the mixing vessel, are introduced in the closed mixing vessel and react without opening the mixing vessel, and the mixing happens without opening the mixing vessel, and also the product is removed from the mixing vessel without opening the mixing vessel.

11. The method according to the preceding claim whereby the content of the mixing vessel is kept under a vacuum pressure during the addition of the reactive polymer and of the cross-linking agent, preferably also during the addition of the plasticizer and/or the extender, if applicable.

12. The method according to any one of claims 10-11 whereby a thickener is introduced into the mixing vessel, and whereby the mixing vessel is kept under about atmospheric pressure during the addition of the thickener, and, if a vacuum pressure is present in the mixing vessel, this vacuum pressure is broken prior to the addition of the thickener.

13. The method according to any one of the claims 10-12 whereby the mixing vessel is kept under a vacuum pressure while pumping the product out of the mixing vessel.

14. The method according to any one of the preceding claims whereby the product is filled into a plastic cartridge as final packaging and the cartridge after filling is closed by introducing into the open end of the cartridge a plunger, **characterized in that** on the inner side of the cartridge, at least on the location where the plunger has to come into contact with the tube, is provided a layer of lubricant.

## Patentansprüche

1. Ein Verfahren zur Herstellung einer feuchtigkeitshärtenden Zusammensetzung, unter Verwendung eines Mischbehälters für die Herstellung des Prepolymers durch die Reaktion eines reaktiven Polymers mit einem Vernetzungsmittel, wobei der Inhalt des Mischbehälters nach dem Schließen des Mischbehälters und der Einbringung von zumindest einem flüssigen Reagens für die Reaktion oder eines anderen flüssigen Ingrediens der Rezeptur des Produkts gerührt wird und der geschlossene Mischbehälter zumindest vorübergehend mit einem Vakuumdruck beaufschlagt wird, wobei der Vakuumdruck bevorzugt höchstens 0,40 bar absolut (bara) beträgt, und optional mindestens 0,001 bara oder 1 mbar absolut, wobei der Vakuumdruck innerhalb von 60 Sekunden nach dem Schließen des Mischbehälters auf einen Vakuumdruck von höchstens 0,40 bara gesenkt wird, wobei dieser Vakuumdruck unterbrochen wird, indem Gas in den Mischbehälter eingelassen wird, und wobei das Gas entfeuchtete Luft mit einem Taupunkt von höchstens -40 °C ist.

2. Das Verfahren nach Anspruch 1, wobei die entfeuchtete Luft einen Taupunkt von höchstens -45 °C hat, bevorzugt einen Taupunkt von höchstens -50 °C.

3. Das Verfahren nach irgendeinem der Ansprüche 1 und 2, wobei das Vernetzungsmittel in den Mischbehälter hinzugefügt wird, **dadurch gekennzeichnet, dass** das Vernetzungsmittel in den Inhalt des Mischbehälters dispergiert wird und dass während der Dispersion ein leichter Überdruck im Mischbehälter im Bereich von 0,05 bis 0,30 barg aufrechterhalten bleibt.

4. Das Verfahren nach irgendeinem der vorigen Ansprüche, wobei die Drehgeschwindigkeit des Rührwerks im Mischbehälter während der Reaktion des Vernetzungsmittels mit dem reaktiven Polymer auf höchstens 300 Drehungen pro Minute beschränkt ist.

5. Das Verfahren nach irgendeinem der vorigen Ansprüche, wobei der Inhalt des Mischbehälters, nach dem Mischen des Vernetzungsmittels in die Flüssigkeit im Mischbehälter, und bevorzugt erst nach der Dispersion des Vernetzungsmittels, mit einem Vakuumdruck beaufschlagt wird, wobei der Vakuumdruck bevorzugt höchstens 0,5 bar absolut (bara) beträgt.

6. Das Verfahren nach irgendeinem der vorigen Ansprüche, wobei das reaktive Polymer mit dem Vernetzungsmittel im Mischbehälter reagiert wird und wobei das Verfahren, nach dem Rühren bis zur Homogenität der Flüssigkeit im Mischbehälter, welcher das reaktive Polymer enthält, und auch nach Entlüftung des verschlossenen Mischbehälters durch Beaufschlagen des Inhalts des Behälters mit einem Vakuumdruck, das Hinzufügen in den Mischbehälter eines Vernetzungsmittels für die Reaktion mit den reaktiven Endgruppen des reaktiven Polymers und dadurch Bilden des Prepolymers und möglicherweise zusätzlich dazu das Hinzufügen eines Streckmittels zum Inhalt des Mischbehälters umfasst, **dadurch gekennzeichnet, dass** der Inhalt des Mischbehälters vor und bevorzugt auch während des Hinzufügens des Vernetzungsmittels mit einem Überdruck beaufschlagt wird, bevorzugt mit einem Überdruck von mindestens 0,1 barg.

7. Das Verfahren nach dem vorigen Anspruch, wobei zumindest einer der Inhaltsstoffe der Zusammensetzung, zum Beispiel ein Füllstoff, mittels eines pneumatischen Transports eingebracht wird, **dadurch gekennzeichnet, dass** der Überdruck durch das Hinzufügen von mindestens einem der Gase erreicht wird, das für den pneumatischen Transport eingesetzt wird.

8. Das Verfahren nach irgendeinem der vorigen Ansprüche, welches den Mischbehälter zur Herstellung des Prepolymers durch die Reaktion des reaktiven Polymers mit dem Vernetzungsmittel verwendet, wobei der Inhalt des Mischbehälters, nach der Einbringung von zumindest einem flüssigen Reagens für die Reaktion oder eines anderen flüssigen Inhaltsstoffes der Rezeptur, gerührt wird und der Inhalt des verschlossenen Mischbehälters mit einem Vakuumdruck beaufschlagt wird, wobei der Vakuumdruck höchstens 0,50 bar absolut (bara) beträgt.

9. Das Verfahren nach dem vorigen Anspruch, wobei der Mischbehälter verschlossen wird und im Mischbehälter ein Vakuumdruck von höchstens 0,40 bara innerhalb von 45 Sekunden nach dem Verschließen des Mischbehälters aufgeschlagen wird.

10. Das Verfahren nach irgendeinem der vorigen Ansprüche, wobei das Verfahren im Chargenmodus betrieben wird und den Mischbehälter für die Herstellung des Prepolymers verwendet, **dadurch gekennzeichnet, dass** das reaktive Polymer und das Vernetzungsmittel sowie die zusätzlichen Ingredienzien, die für den Herstellungsschritt im Mischbehälter erforderlich sind, in den verschlossenen Mischbehälter eingebracht werden und ohne Öffnen des Mischbehälters reagieren, und das Mischen ohne Öffnen des Mischbehälters stattfindet, und auch das Produkt ohne Öffnen des Mischbehälters aus dem Mischbehälter entfernt wird.

11. Das Verfahren nach dem vorigen Anspruch, wobei der Inhalt des Mischbehälters während des Hinzufügens des reaktiven Polymers und des Vernetzungsmittels unter einem Vakuumdruck gehalten wird, bevorzugt auch während des Hinzufügens des Weichmachers und/oder des Streckmittels, falls zutreffend.

12. Das Verfahren nach irgendeinem der Ansprüche 10 bis 11, wobei ein Verdickungsmittel in den Mischbehälter eingebracht wird, und wobei der Mischbehälter während des Hinzufügens des Verdickungsmittels unter ungefähr atmosphärischem Druck gehalten wird, und, wenn ein Vakuumdruck im Mischbehälter vorhanden ist, dieser Vakuumdruck vor dem Hinzufügen des Verdickungsmittels gebrochen wird.

13. Das Verfahren nach irgendeinem der Ansprüche 10 bis 12, wobei der Mischbehälter unter einem Vakuumdruck gehalten wird, während das Produkt aus dem Mischbehälter herausgepumpt wird.

14. Das Verfahren nach irgendeinem der vorigen Ansprüche, wobei das Produkt in eine Kunststoffkartusche als Endverpackung gefüllt wird und die Kartusche nach dem Befüllen verschlossen wird, indem in das offene Ende der Kartusche ein Auspressstößel eingeführt wird, **dadurch gekennzeichnet, dass** an der Innenseite der Kartusche, zumindest an der Stelle, wo der Auspressstößel in Kontakt mit der Röhre kommen muss, eine Schicht von Gleitmittel aufgetragen ist.

## Revendications

1. Procédé de production d'une composition durcissable à l'humidité, utilisant un récipient de mélange pour la production du prépolymère par réaction d'un polymère réactif avec un agent de réticulation, selon lequel après fermeture du récipient de mélange et l'introduction d'au moins un réactif liquide pour la réaction ou d'un autre ingrédient liquide de la formulation du produit, le contenu du récipient de mélange est agité et le récipient de mélange fermé est au moins temporairement mis sous une pression de vide, selon lequel la pression de vide est de préférence au maximum de 0,40 bars absolus (bara), et éventuellement au moins 0,001 bara ou 1 mbar absolu, de sorte que la pression de vide est ramenée à une pression de vide d'au plus 0,40 bara dans les 60 secondes suivant la fermeture du récipient de mélange, cette pression de vide étant interrompue en laissant entrer un gaz dans le récipient de mélange, et selon lequel le gaz est de l'air séché ayant un point de rosée d'au plus - 40 °C.

2. Procédé selon la revendication 1, selon lequel l'air séché a un point de rosée d'au plus -45 °C, de préférence un point de rosée d'au plus - 50 °C.

3. Procédé selon les revendications 1 et 2, selon lequel l'agent de réticulation est ajouté au récipient de mélange, **caractérisé en ce que** l'agent de réticulation est dispersé dans le contenu du récipient de mélange et, pendant la dispersion, une légère surpression est maintenue dans le récipient de mélange dans la plage de 0,05 à 0,30 barg.

4. Procédé selon l'une quelconque des revendications précédentes, selon lequel la vitesse de rotation de l'agitateur dans le récipient de mélange pendant la réaction de l'agent de réticulation avec le polymère réactif est limitée à 300 tours par minute au plus.

5. Procédé selon l'une quelconque des revendications précédentes, selon lequel, après mélange de l'agent de réticulation dans le liquide dans le récipient de mélange, et de préférence seulement après la dispersion de l'agent de réticulation, le contenu du récipient de mélange est mis sous une pression de vide, la pression de vide étant de préférence au maximum de 0,5 bar absolu (bara).

6. Procédé selon l'une quelconque des revendications précédentes, selon lequel le polymère réactif est mis à réagir avec l'agent de réticulation dans le récipient de mélange et selon lequel, après l'agitation pour rendre homogène le liquide dans le récipient de mélange, qui contient le polymère réactif, et également après la désaération du récipient de mélange fermé en mettant le contenu du récipient sous une pression de vide, le procédé comprend l'addition dans le récipient de mélange de l'agent de réticulation pour la réaction avec les groupes terminaux réactifs du polymère réactif et ainsi la formation du prépolymère et éventuellement en plus l'addition d'un diluant au contenu du récipient de mélange, **caractérisé en ce que** le contenu du récipient de mélange avant et de préférence aussi pendant l'addition de l'agent de réticulation est mis à une surpression, de préférence à une surpression d'au moins 0,1 barg.

7. Procédé selon la revendication précédente, selon lequel au moins un des ingrédients de la composition, par exemple une charge, est introduit au moyen d'un transport pneumatique, **caractérisé en ce que** la surpression est atteinte par l'addition d'au moins un des gaz qui est utilisé pour le transport pneumatique.

8. Procédé selon l'une quelconque des revendications précédentes utilisant le récipient de mélange pour la production du prépolymère par la réaction du polymère réactif avec l'agent de réticulation, selon lequel, après l'introduction d'au moins un réactif liquide pour la réaction ou d'un autre ingrédient liquide de la formulation, le contenu du récipient de mélange est agité et le contenu du récipient de mélange fermé est mis sous une pression de vide, selon lequel la pression de vide est au plus de 0,50 bar absolu (bara).

9. Procédé selon la revendication précédente, selon lequel le récipient de mélange est fermé et une pression de vide d'au plus 0,40 bara est installée à l'intérieur du récipient de mélange dans les 45 secondes suivant la fermeture du récipient de mélange.

10. Procédé selon l'une quelconque des revendications précédentes, selon lequel le procédé est mis en œuvre en traitement par lot et utilise le récipient de mélange pour la production du prépolymère, **caractérisé en ce que** le polymère réactif et l'agent de réticulation, ainsi que les ingrédients supplémentaires qui sont nécessaires pour l'étape de production dans le récipient de mélange, sont introduits dans le récipient de mélange fermé et réagissent sans ouvrir le récipient de mélange, et le mélange a lieu sans ouvrir le récipient de mélange, et également le produit est retiré du récipient de mélange sans ouvrir le récipient de mélange.

11. Procédé selon la revendication précédente, selon lequel le contenu du récipient de mélange est maintenu sous une pression de vide pendant l'addition du polymère réactif et de l'agent de réticulation, de préférence également pendant l'addition du plastifiant et/ou du diluant, le cas échéant.

12. Procédé selon l'une quelconque des revendications 10 à 11, selon lequel un épaississant est introduit dans le récipient de mélange, et selon lequel le récipient de mélange est maintenu à environ la pression atmosphérique pendant l'addition de l'épaississant, et, si une pression de vide est présente dans le récipient de mélange, cette pression de vide est rompue avant l'addition de l'épaississant.

13. Procédé selon l'une quelconque des revendications 10 à 12, selon lequel le récipient de mélange est maintenu sous une pression de vide pendant le pompage du produit hors du récipient de mélange.

14. Procédé selon l'une quelconque des revendications précédentes, selon lequel le produit est rempli dans une cartouche en plastique comme emballage final et la cartouche, après remplissage, est fermée en introduisant dans l'extrémité ouverte de la cartouche un piston, **caractérisé en ce que** sur le côté intérieur de la cartouche, au moins à l'endroit où le piston doit entrer en contact avec le tube, est prévue une couche de lubrifiant.
